# EUROPEAN PATENT APPLICATION

(11) **EP 4 068 445 A2**
(43) Date of publication of application: **05.10.2022**
(21) Application number: 21213671.7
(22) Date of filing: 10.12.2021
(51) Int. Cl.: H01M 10/04, H01M 50/105, H01M 50/119, H01M 50/121, H01M 50/129, H01M 50/131, H01M 10/0525

(54) **POUCH-TYPE SECONDARY BATTERY AND BATTERY MODULE**

(30) Priority: 30.03.2021 KR 20210041419
(71) Applicant: LG Energy Solution, Ltd., Seoul 07335 (KR)
(72) Inventor: OH, Se Young, 34122 Daejeon (KR); HA, Jeong Min, 34122 Daejeon (KR); KIM, Sin Woong, 34122 Daejeon (KR); KIM, Geun Hee, 34122 Daejeon (KR); KIM, Hyun Beom, 34122 Daejeon (KR); KWON, Hyung Ho, 34122 Daejeon (KR)
(74) Representative: Goddar, Heinz J.

(57) **Abstract**

A pouch-type secondary battery includes an electrode assembly, in which a plurality of positive electrodes and a plurality of negative electrodes are alternately stacked with separators therebetween, and a pouch which is formed by sealing a pair of cases integrally connected to each other by a folding portion and includes an accommodation portion that accommodates the electrode assembly. A plurality of outer walls forming a perimeter of the accommodation portion may include a folding portion-side outer wall, which includes the folding portion, and a sealing portion-side outer wall which is connected to a sealing portion in which the pair of cases are fused to each other. An average distance between ends of the plurality of negative electrodes and the folding portion-side outer wall may be about 0.6 mm or less.

## Description

### BACKGROUND OF THE INVENTION

### FIELD OF THE INVENTION

The present invention relates to a pouch-type secondary battery and a battery module having the same.

### DESCRIPTION OF THE RELATED ART

In general, there are several types of secondary batteries such as nickel cadmium batteries, nickel hydrogen batteries, lithium ion batteries, and lithium ion polymer batteries. These secondary batteries have been applied to and used for not only small products such as digital cameras, P-DVDs, MP₃Ps, cellular phones, PDAs, portable game devices, power tools, and E-bikes, but also large products requiring high power such as electric vehicles and hybrid vehicles, and power storage devices or backup-power storage devices for storing surplus generated power and new renewable energy.

In order to manufacture the secondary batteries, first of all, electrode active material slurry is applied to a positive electrode collector and a negative electrode collector to manufacture a positive electrode and a negative electrode, and the positive electrode and the negative electrode are stacked on both sides of a separator to form an electrode assembly having a predetermined shape. Subsequently, the electrode assembly is accommodated in a battery case, and the battery case is sealed after an electrolyte is injected therein.

The secondary batteries are classified into a pouch type, a can type, or the like according to a material of a case that accommodates the electrode assembly. In the pouch type, the electrode assembly is accommodated in a pouch made of a flexible polymer material. Also, in the can type, the electrode assembly is accommodated in a case made of a metal, a plastic material, or the like.

The pouch, which is a case of the pouch-type secondary battery, is manufactured by forming a cup portion through press processing on a flexible pouch film. Then, after the cup portion has been formed, the electrode assembly is accommodated in an accommodation space of the cup portion, and sides thereof are sealed. Through this, the secondary battery is manufactured.

The drawing forming, which is one of the press processing, is performed in a manner in which: a pouch film is inserted into a forming apparatus such as a press machine; and the pouch film is pressed and drawn by a punch. The pouch film is made of a layers, and a moisture barrier layer positioned as an inner layer is formed of metal. However, according to the related art, metal of a moisture barrier layer has the larger grain size among aluminum alloys, and the thickness of the moisture barrier layer is small. Thus, the formability of the moisture barrier layer is deteriorated. Thus, when forming a cup portion in a pouch film, there is a limitation in improving the thickness of a bridge and the width of a folding portion while the cup portion is formed to be deep. Also, there is a limitation in reducing the size of a bat ear, and thus, the energy density to the volume of the secondary battery is deteriorated. Furthermore, it is a limitation in manufacturing a secondary battery having an overall sharp shape. Thus, the appearance is not aesthetically pleasing, and the commercial value deteriorates.

### SUMMARY OF THE INVENTION

Disclosed herein is a pouch-type secondary battery that provides a high energy density as well as an aesthetically pleasing appearance by minimizing a distance between an electrode of an electrode assembly and a pouch.

Furthermore, a battery module is disclosed providing an enhanced cooling efficiency of a secondary battery by minimizing a distance between an electrode of an electrode assembly and a pouch.

There is provided a pouch-type secondary battery which may include an electrode assembly and a pouch. Positive electrodes and negative electrodes may be alternately stacked with separators therebetween in the electrode assembly. The pouch may be formed by sealing a pair of cases, wherein the cases may be integrally connected to each other via a folding portion. The cases may include an accommodation portion to accommodate the electrode assembly. Outer walls, also referred to as sidewalls, may form a perimeter of the accommodation portion. The outer walls may include a folding portion-side outer wall and a sealing portion-side outer wall. The folding portion may include the folding portion. The sealing portion-side outer wall may be connected to a sealing portion in which the pair of cases are fused to each other. An average distance between ends of the negative electrodes and the folding portion-side outer wall may be about 0.6 mm or less.

The subject matter disclosed herein may allow for increasing a compactness of the secondary battery. This may contribute to increasing the energy density, increasing a cooling effectiveness, reducing space requirements, providing a tidy appearance, and further effects and advantages described below. The technical effects may be achieved by a proper selection of the material forming the pouch. The technical effects may be achieved by a proper selection of thicknesses of layers forming the pouch. In particular, the pouch may contain an aluminum alloy from a series with alloy no. AA80xx (xx representing selectable digits). In particular, the pouch may contain a material that has a specific iron content, a specific silicon content, and/or a specific grain size. In particular, the pouch may have a layer that contains an aluminum alloy from the AA80xx series, more specifically AA8021. In particular, the pouch my comprise a multilayer structure comprising a moisture barrier layer and a sealant layer, wherein the thicknesses of these layers may be determined, in absolute values and/or in relation to each other, as disclosed herein.

With respect to a locations spaced apart from each other in a longitudinal direction of the folding portion-side outer wall, each of average distances between the ends of the negative electrodes and the folding portion-side outer wall may be about 0.6 mm or less, and the total average distance may be about 0.5 mm or less.

The maximum distance between ends of the negative electrodes and the folding portion-side outer wall maybe about 0.8 mm or less.

The ends of the negative electrodes may further protrude toward the folding portion-side outer wall than ends of the positive electrodes, and the average distance between the ends of the negative electrodes and the folding portion-side outer wall may be less than an average distance between the ends of the negative electrodes and the ends of the positive electrodes.

A distance between each of the ends of the negative electrodes and the folding portion-side outer wall may be less than half a distance between each of the ends of the negative electrodes and each of the ends of the positive electrodes.

The folding portion may have a groove shape extending from one end portion to the other end portion of the folding portion-side outer wall.

The accommodation portion may include: a first edge rounded and connecting a top surface or a bottom surface of the accommodation portion to the folding portion-side outer wall; a second edge rounded and connecting the top surface or the bottom surface of the accommodation portion to the sealing portion-side outer wall; a third edge rounded and connecting the folding portion-side outer wall to the sealing portion-side outer wall; and a corner to which the first edge, the second edge, and the third edge are connected.

A virtual line, which is in contact with the innermost side of the folding portion and parallel to a stacking direction of the electrode assembly, may pass through at least one of the top surface, the bottom surface, or the first edge of the accommodation portion.

A radius of curvature of the third edge may be greater than a radius of curvature of the first edge and a radius of curvature of the second edge.

A radius of curvature of the corner may increase in a direction from a peripheral region to a central region.

The pouch may include a protrusion portion which connects an edge of the sealing portion to the folding portion and protrudes further than the edge of the sealing portion in a width direction of the accommodation portion, and a boundary between the protrusion portion and the folding portion may be positioned further outward, in a longitudinal direction of the folding portion, than a boundary between the first edge and the corner.

The pouch may be manufactured by forming a pouch film. The pouch film may include: a sealant layer made of a first polymer and formed as an innermost layer; a surface protection layer made of a second polymer and formed as an outermost layer; and a moisture barrier layer which is made of metal including an alloy no. AA80XX series aluminum alloy and stacked between the surface protection layer and the sealant layer. A thickness of the moisture barrier layer may be about 50 µm about 80 µm, and a thickness of the sealant layer may be about 60 µm to about 100 µm.

The alloy no. of the aluminum alloy may be AA8021.

The aluminum alloy may include about 1.3 wt% to about 1.7 wt% of iron and about 0.2 wt% or less of silicon, and may have a grain size of about 10 µm to about 13 µm.

The thickness of the moisture barrier layer may be about 55 µm about 65 µm, and the thickness of the sealant layer may be about 75 µm to about 85 µm.

The pouch film may further include a drawing assistance layer which is made of a third polymer and stacked between the surface protection layer and the moisture barrier layer.

A thickness of the drawing assistance layer may be about 20 µm to about 50 µm.

According to another aspect of the present invention, there is provided a pouch-type secondary battery including: an electrode assembly in which a positive electrodes and a negative electrodes are alternately stacked with separators therebetween; and a pouch which is formed by sealing a pair of cases integrally connected to each other by a folding portion and includes an accommodation portion that accommodates the electrode assembly. Outer walls forming a perimeter of the accommodation portion may include: a folding portion-side outer wall including the folding portion; and a sealing portion-side outer wall connected to a sealing portion in which the pair of cases are fused to each other. Ends of the negative electrodes may further protrude toward the folding portion-side outer wall than ends of the positive electrodes, and a distance between each of the ends of the negative electrodes and the folding portion-side outer wall may be less than half a distance between each of the ends of the negative electrodes and each of the ends of the positive electrodes.

According to another aspect of the present invention, there is provided a battery module including: a housing; a secondary batteries which are stacked within the housing while standing vertically; and a cooling unit provided on a bottom surface inside the housing and configured to cool the secondary batteries. Each of the secondary batteries may include: an electrode assembly in which a positive electrodes and a negative electrodes are alternately stacked with separators therebetween; and a pouch which is formed by sealing a pair of cases integrally connected to each other by a folding portion and includes an accommodation portion that accommodates the electrode assembly. Outer walls forming a perimeter of the accommodation portion may include: a folding portion-side outer wall which includes the folding portion and is adjacent to the cooling unit; and a sealing portion-side outer wall connected to a sealing portion in which the pair of cases are fused to each other. An average distance between ends of the negative electrodes and the folding portion-side outer wall may be about 0.6 mm or less.

According to another aspect of the present invention, there is provided a battery module including: a housing; a secondary batteries which are stacked within the housing while standing vertically; and a cooling unit provided on a bottom surface inside the housing and configured to cool the secondary batteries. Each of the secondary batteries may include: an electrode assembly in which a positive electrodes and a negative electrodes are alternately stacked with separators therebetween; and a pouch which is formed by sealing a pair of cases integrally connected to each other by a folding portion and includes an accommodation portion that accommodates the electrode assembly. Outer walls forming a perimeter of the accommodation portion may include: a folding portion-side outer wall which includes the folding portion and is adjacent to the cooling unit; and a sealing portion-side outer wall connected to a sealing portion in which the pair of cases are fused to each other. Ends of the negative electrodes may further protrude toward the folding portion-side outer wall than ends of the positive electrodes, and a distance between each of the ends of the negative electrodes and the folding portion-side outer wall may be less than half a distance between each of the ends of the negative electrodes and each of the ends of the positive electrodes.

### BRIEF DESCRIPTION OF THE DRAWINGS

The above and other aspects, features and other advantages of the present invention will be more clearly understood from the following detailed description taken in conjunction with the accompanying drawings, in which:
- FIG. 1: is an assembly view of a pouch-type secondary battery;
- FIG. 2: is a schematic view showing a state in which a pouch is being folded;
- FIG. 3: is a schematic view showing a state in which a pouch is folded;
- FIG. 4: is a plan view of a pouch-type secondary battery;
- FIG. 5: is an enlarged schematic view of the surroundings of a folding portion-side outer wall within a pouch-type secondary battery;
- FIG. 6: is a schematic view showing a state in which a pouch according to another embodiment of the present invention is being folded;
- FIG. 7: is a schematic view showing a state in which a pouch according to another embodiment of the present invention is folded;
- FIG. 8: is a cross-sectional view of a pouch film;
- FIG. 9: is a graph showing the iron and silicon contents in each of an alloy no. AA8079 aluminum alloy and an alloy no. AA8021 aluminum alloy;
- FIG. 10: is a graph showing changes in a tensile strength, an elongation rate, and a grain size according to the iron content in each of the alloy no. AA8079 aluminum alloy and the alloy no. AA8021 aluminum alloy;
- FIG. 11: is an enlarged SEM image of grains of each of the alloy no. AA8079 aluminum alloy and the alloy no. AA8021 aluminum alloy;
- FIG. 12: is a perspective view illustrating a portion of an appearance of a pouch-type secondary battery;
- FIG. 13: is a view of the pouch-type secondary battery of FIG. 12 when viewed in a different direction;
- FIG. 14: is a perspective view illustrating a portion of an appearance of a pouch-type secondary battery according to the related art;
- FIG. 15: is a view of the pouch-type secondary battery of FIG. 14 when viewed in a different direction;
- FIGS. 16 and 17: are CT images for measuring a distance between a folding portion-side outer wall and a negative electrode;
- FIGS. 18 and 19: are CT images in which a distance between a folding portion-side outer wall and a negative electrode according to the related art is measured; and
- FIG. 20: is a schematic view of a battery module.

### DETAILED DESCRIPTION OF THE PREFERRED EMBODIMENT

Hereinafter, specific examples will be described in detail with reference to the accompanying drawings. The examples should facilitate the understanding of the subject matter disclosed herein. The claimed subject matter is not limited to the particular combinations of features as shown in the following examples. Some of the features disclosed herein may be omitted. Some of the features disclosed herein may be combined in a manner not explicitly described in connection with the following examples.

In order to clearly describe the present invention, parts irrelevant to the description are omitted, and descriptions related to well-known functions or configurations are omitted for the brevity and intelligibility of the disclosure. Herein, same or like reference signs may indicate same or like features and components, unless indicated otherwise.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

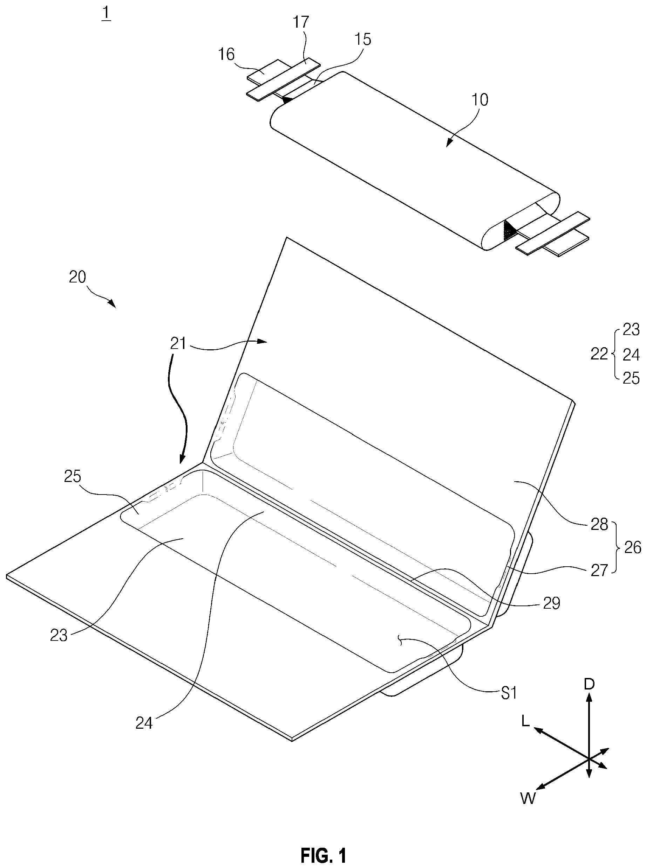

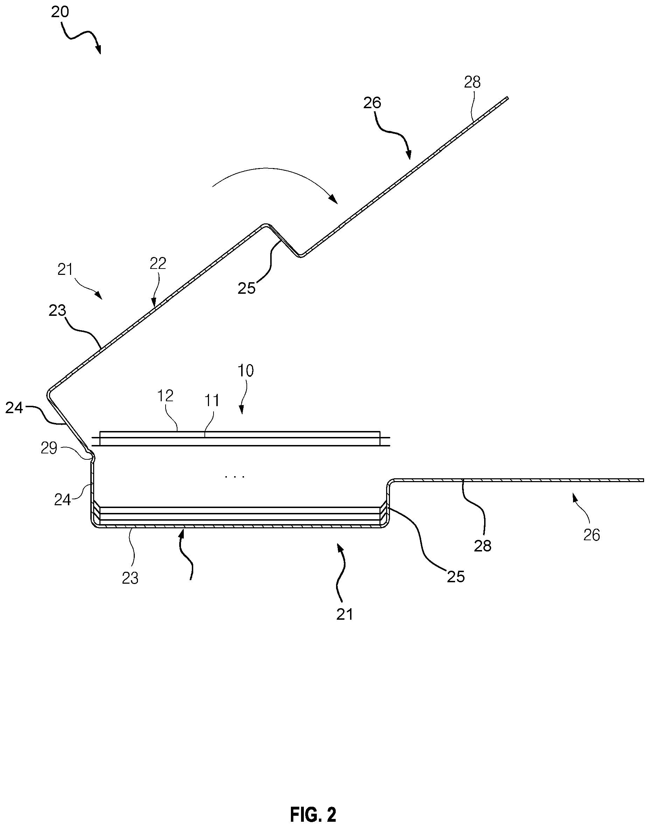

FIG. 1 is an assembly view of a pouch-type secondary battery. FIG. 2 is a schematic view illustrating a folding process of a pouch.

A pouch-type secondary battery 1 (also referred to hereinafter as a secondary battery) may include an electrode assembly 10 and a pouch 20 to accommodate the electrode assembly 10. Generally, a pouch as disclosed herein may also referred to as a secondary battery case, a case or a pouch-type case.

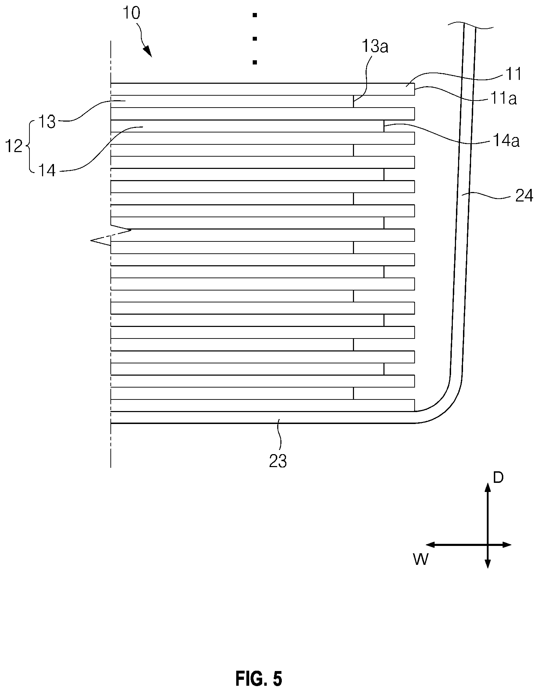

The electrode assembly 10 may be formed by alternately stacking separators 11 and electrodes 12, see e.g. FIG. 2. The electrodes 12 may include positive electrodes 13 and negative electrodes 14 (see FIG. 5). The positive electrodes 13 and the negative electrodes 14 may be alternately stacked with separators 11 therebetween.

Each of the electrodes 12 may be formed by applying an active material slurry onto an electrode collector. The electrode collector may be provided as, or comprise, a metal foil or a metal mesh. For example, the electrode collector may include aluminum or an aluminum-based material. For example, the electrode collector may include copper or a copper-based material.

Electrode tabs 15 may be provided in the electrode assembly 10. Each of the positive electrode 13 and the negative electrode 14 of the electrode assembly 10 may be connected with a respective one of the electrode tabs 15. The electrode tabs 15 may protrude outward from the electrode assembly 10, thereby providing a passageway for electrons to move into and out of the electrode assembly 10.

The electrode tabs 15 connected to the positive electrodes 13 and the electrode tabs 15 connected to the negative electrodes 14 may protrude from the electrode assembly 10 in different directions. Alternatively or additionally, the electrode tabs 15 connected to the positive electrodes 13 and the electrode tabs 15 connected to the negative electrodes 14 may protrude from a same side of the electrode assembly 10 in a same direction.

Electrode leads 16 for conducting electricity out from the secondary battery 1 are connected to the electrodes tab 15. The electrode leads 16 may be connected to the electrode tabs 15 through spot welding or the like. One end of an electrode lead 16 may be connected to the electrode tabs 15, and the other end of the electrode lead 16 may protrude outward from the pouch 20.

The electrode leads 16 may be in a part surrounded by a respective insulating part 17. For example, the insulating part 17 may include an insulating tape. The insulating part 17 may be positioned between a pair of terraces 26 of the pouch 20 which will be described later. With the electrode assembly 10 in place, the pair of terraces 26 may be heat-fused to each other. During this, a portion of the pair of terraces 26 may be heat-fused with the insulating part 17. Thus, the insulating part 17 may provide electrical insulation between the electrode assembly 10 and the pouch 20, in particular an electrical leakage via the electrode lead 16. At the same time, the insulating part 17 may provide sealing of the pouch 20, in particular to maintain an electrolyte inside the pouch 20.

The pouch 20 may be formed as a pair of cases 21 connected to each other via a folding portion 29. Hereinafter, the structure of each case 21 will be described with reference to a state before folding (and/or sealing) the pouch 20. The following description may also apply to a state in which the pouch 20 is opened wide by removing bonding or sealing between the cases 21 of the pouch 20. The cases 21 may be formed as mirror images of each other in a plan view, wherein dimensions of the cases 21 may differ in a depth direction D, or any of the features described may be provided differently to the individual cases 21. Alternatively, the pouch may comprise a single case 21.

The cases 21 may each have a tray-like shape that is opened to one side. Each of cases 21 may include a cup portion 22 having a recessed shape and a terrace 26 surrounding the cup portion 22. Each of the cases 21 may comprise a bottom portion 23, sidewalls 24, 25 (also referred to as outer walls or peripheral portions as described below) and the terrace 26. The bottom portion 23 may be substantially flat and have a four-sided shape with rounded corners. The sidewalls 24, 25 may surround the bottom portion 23 and extend between the bottom portion 23 and the terrace 26. In examples where the bottom portion 23 has a four-sided shape, the sidewalls 24, 25 may comprise four sidewalls corresponding to the four sides of the bottom portion 23. From these sidewalls, a sidewall 24 that is arranged proximal and parallel to the folding portion 29 may be referred to as a first surface 24, and the other sidewalls may be referred to as second surfaces 25 (further described below). The terrace 26 may surround at least some of the sidewalls, and specifically surround the second surfaces 25 (as described below). The terrace 26 may extend laterally outwards from the respective sidewall 24, 25. The terrace 26 of either of the cases 21 may be flat and have a shape of a sheet. The terrace 26 may be arranged substantially parallel to the respective bottom portion 23.

The cup portion 22 may be recessed from the terrace 26 by a predetermined depth to form a recessed space Si. The recessed space Si may also referred to as an accommodation space Si. The recessed space Si may be configured to accommodate the electrode assembly 10 therein. The recessed space Si maybe dimensioned such to receive the electrode assembly 10. The recessed space Si may correspond to the cup portion 22 as disclosed herein. As shown in FIG. 1, the recessed space Si may be formed by the bottom portion 23 and the sidewalls 24, 25 as described above.

The cup portions 22 of the pair of cases 21 may be connected to each other via the folding portion 29. That is, the folding portion 29 may be arranged between the pair of cup portions 22. The folding portion 29 maybe referred to as a bridge in a state in which the pouch 20 is unfolded.

A direction in which the folding portion 29 extends may define the longitudinal direction L of the secondary battery 1 (of the pouch 20). Herein, a width may be determined in a width direction W of the case 21 that is perpendicular to the longitudinal direction L and along a plane in which the respective case 21 (or the respective cup portion 22) lies. A depth may be determined in a depth direction D that is perpendicular to the longitudinal direction L and perpendicular to the width direction W of the respective case (or the respective cup portion 22). The depth direction D may also be referred to as a stacking direction of the electrode assembly 10. As such, the width direction W and the depth direction D may be tied to the orientation of the respective case 21 (i.e., may move together with the respective case 21, as the pouch 20 is folded). The longitudinal direction L, the width direction W and the depth direction D may be perpendicular to one another. In FIG. 1 and some of the following drawings, the longitudinal direction L, the width direction W and the depth direction D are depicted to help orientation. Any of these directions L, W and D may refer to the secondary battery 1 as a whole (e.g., after folding and sealing), to the pouch 20, to the respective case 21 or the respective cup portion 22.

With the electrode assembly 10 being accommodated in the recessed space Si of one of the cup portions 22, the pouch 20 may be folded about the folding portion 29 so that the pair of cup portions 22 face each other. Accordingly, the other one of the cup portions 22 may be arranged over the electrode assembly 10 so as to cover it. That is, the pouch 20 maybe folded such that the recessed spaces Si of the cup portions 22 communicate with each other, with the electrode assembly 10 being accommodated in the recessed spaces Si.

The recess depths of the pair of cup portions 22 may be equal. The pair of cup portions 22 may be formed to be mirror-symmetrical to each other. Alternatively or additionally, the recess depths of the pair of cup portions 22 may be different, and the pair of cup portions 22 may not be mirror-symmetrical.

In the following, the pouch 20 will be described with reference to a quadrangular tray-like shape of the cases 21 as exemplarily shown in FIG. 1, where the bottom portion 23 has a four-sided shape with rounded corners in a plan view, and the sidewalls 24, 25 maybe formed along edges of the bottom portion 23 with a constant depth. The peripheral portions 24, 25 and the bottom portion 23 maybe provided as a single piece.

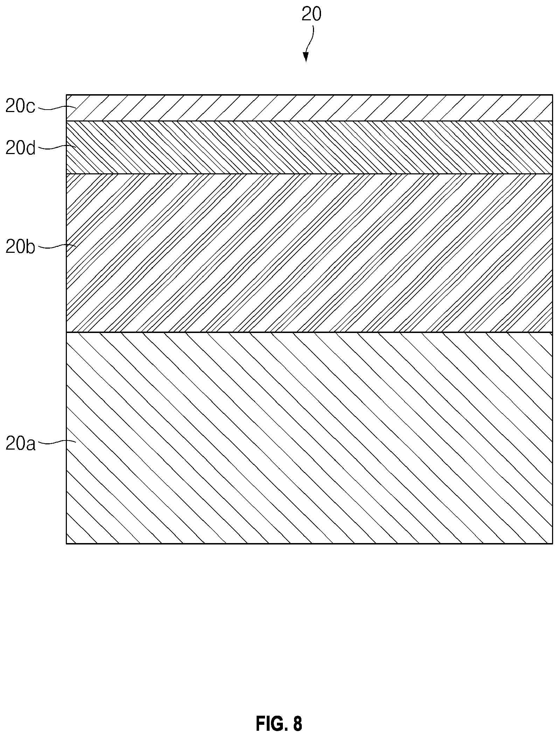

In either one of the cases 21, the bottom portion 23 may be formed in parallel to the terrace 26. The bottom portion 23 may be provided as a flat sheet (specifically a laminate as described below in connection with FIG. 8).

Hereinafter, the sidewalls 24, 25 may be referred to as peripheral portions 24, 25 in an interchangeable manner, unless indicated otherwise. The peripheral portions 24 and 25 may surround the recessed space S1 in conjunction with the bottom portion 23. In more detail, the peripheral portions 24 and 25 may include a first surface 24 connected to the folding portion 29 and second surfaces 25 connected to the terrace 26. The three second surfaces 25 connected to each other may form a U-shape in a plan view. Each of the peripheral portions 24, 25 may be a flat sheet (specifically a laminate as described below in connection with FIG. 8).

The terrace 26 may partly surround the cup portion 22 of the respective case 21. As for example shown in FIG. 1, the terrace 26 may surround three sides of the four-sided cup portion 22. The terrace 26 may be connected to upper ends of the second surfaces 25 of the cup portion 22. The terrace 26 may be U-shaped around the respective cup portion 22.

The terrace 26 may include an expansion portion 28 on an opposite side to the folding portion 29. The terrace 26 may include side portions 27 connecting between the folding portion 29 and the expansion portion 28.

The expansion portion 28 may extend from the adjoining sidewall 25 in a direction perpendicular to the longitudinal direction of the pouch 20, which may be defined by the direction in which the folding portion 29 extends, as described above. The side portions 27 may extend from the respective adjoining sidewall 25 in a direction parallel to the longitudinal direction of the pouch 20. The side portions 27 may be arranged on opposite sides of the cup portion 22.

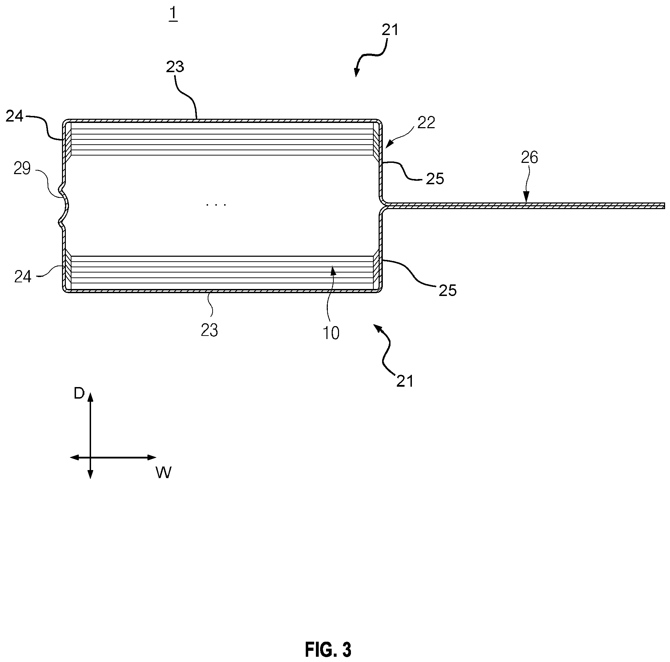

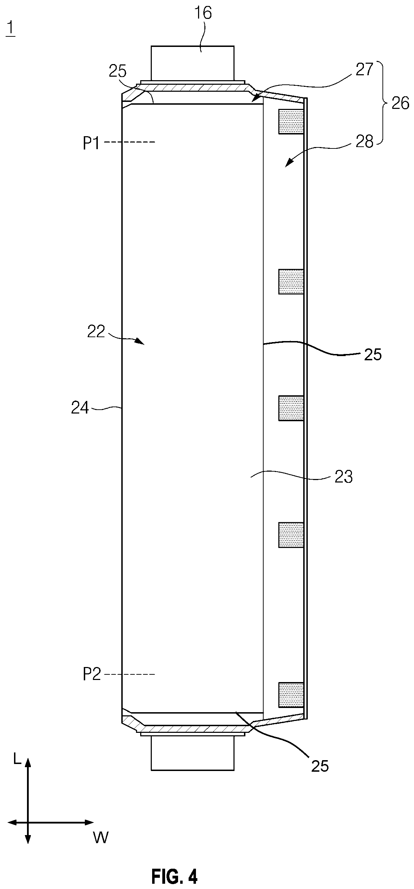

FIG. 3 is a schematic view showing a state in which a pouch is folded (thus closed). FIG. 4 is a plan view of a pouch-type secondary battery.

With the electrode assembly 10 being disposed between the cup portions 22, the pouch 20 maybe folded about the folding portion 29. Then the terraces 26 may be fused with each other. As a result, the secondary battery 1 may be formed comprising the cases 21 sealed in the above manner.

The secondary battery 1 may include an accommodation portion to accommodate the electrode assembly 10. The accommodation portion may correspond to the recessed portions Si of the cases 21 after folding the pouch 20 in the manner disclosed herein. The accommodation portion may comprise a sealing portion in which the cases 21 are fused with each other.

The accommodation portion may be provided by the cup portions 22 of the cases 21 arranged such as to communicate with each other. Hereinafter, the accommodation portion may also be labelled with the reference sign 22 corresponding to the cup portions 22. Furthermore, since the sealing portion is formed as the terraces 26 of the cases 21 are fused, the sealing portion may be correspondingly labelled with the reference sign 26 hereinafter.

The accommodation portion 22 may include a bottom surface and a top surface which cover the electrode assembly 10 from both sides with respect to the stacking direction of the electrode assembly 10. The bottom surface and/or the top surface of the accommodation portion 22 may be provided by the bottom portions 23 of the cases 21 (i.e., correspond to the bottom portions 23).

The accommodation portion 22 may include outer walls (sidewalls) which form a perimeter (lateral surfaces) of the accommodation portion 22 and laterally surround the electrode assembly 10. The outer walls of the accommodation portion 22 may be provided by the sidewalls (peripheral portions) 24, 25 of the cases 21 and the folding portion 29.

The outer walls may include a folding portion-side outer wall including the folding portion 29. The folding portion-side outer wall may refer to the outer wall of the accommodation portion that is arranged on the side of the folding portion 29. As such, the folding portion-side outer wall may include the folding portion 29 and the first sidewalls 24 of the cases 21. Hereinafter, the folding portion-side outer wall may be labelled with the reference sign 24 in a simplifying manner. Also, the folding portion-side outer wall 24 may be referred to as fold sidewall 24. These terms may be used interchangeably hereinafter.

The outer walls may include a sealing portion-side outer wall connected to the sealing portion 26. The sealing portion-side outer wall may refer to outer walls of the accommodation portion 22 that are formed by folding the pouch 20 such that the peripheral portions 25 of the cases 21 are aligned upon each other. As such, the sealing portion-side outer wall may include the corresponding second surfaces 25 of the cases 21. Hereinafter, the sealing portion-side outer wall may be labelled with the reference sign 25 in a simplifying manner. Also, the sealing portion-side outer wall 25 may be referred to as sealing sidewall 25. These terms may be used interchangeably hereinafter.

In an example, the accommodation portion 22 may be block-shaped with four sidewalls extending between a four-sided bottom portion (i.e., the bottom portion 23 of a first case 21) and a four-sided top portion (i.e., the bottom portion 23 of a second case 21). In such example, the sidewall that is arranged on the side of the folding portion 29 may be referred to as the folding portion-side outer wall 24 (or the fold sidewall 24). The other sidewalls may be collectively referred to as the sealing portion-side outer wall 25 (or the sealing sidewall 25).

The bottom surface of the accommodation portion 22 may be formed by the bottom portion 23 of one of the cases 21 (i.e., the case 21 arranged at the bottom). The top surface of the accommodation portion 22 may be formed by the bottom portion 23 of the other one of the cases 21 (i.e., the case 21 arranged on top). Hereinafter, the bottom surface and the top surface of the accommodation portion 22 maybe labelled with the reference sign 23 corresponding to the bottom portion 21 of the cases 21.

The folding portion-side outer wall of the accommodation portion 22 may be formed by the first surfaces 24 of the cup portions 22 and the folding portion 29. Hereinafter, the folding portion-side outer wall of the accommodation portion 22 may be labelled with the reference sign 24 for the sake of convenience, and may include the folding portion 29 after folding the pouch 20 (and fusing the terraces 26).When the cup portions 22 of the cases 21 have the same or similar depth, the folding portion 29 may be located in a central region of the folding portion-side outer wall 24 with respect to the stacking direction of the electrode assembly 10.

The sealing portion-side outer wall of the accommodation portion 22 may be formed by the second surfaces 25 of the cases 21 arranged opposite to the first surfaces 24. Hereinafter, the sealing portion-side outer wall of the accommodation portion 22 may be labelled with the reference sign 25 for the sake of convenience.

Thus, the folding portion-side outer wall 24 may form a portion of the perimeter of the accommodation portion 22, and the sealing portion-side outer wall 25 may form another portion of the perimeter of the accommodation portion 22. The folding portion-side outer wall 24 may include the folding portion 29, and the sealing portion-side outer wall 25 may be connected to the sealing portion 26.

The sealing portion 26 may include a first sealing portion in which the side portions 27 of the cases 21 are fused and a second sealing portion in which the expansion portions 28 of the cases 21 are fused. Hereinafter, the first sealing portion may be labelled with the reference sign 27, and the second sealing portion may be labelled with the reference sign 28.

The first sealing portion 27 may extend from a respective adjoining sealing portion-side outer wall 25 in the longitudinal direction of the secondary battery 1. A pair of first sealing portions 27 maybe provided on opposite sides of the accommodation portion 22. The electrode leads 16 may protrude outward from the pouch 20 through the first sealing portions 27.

The second sealing portion 28 may extend from the adjoining sealing portion-side outer wall 25 in a direction perpendicular to the longitudinal direction of the secondary battery 1. The second sealing portion 28 may be arranged on a side of the accommodation portion 22 opposite to the folding portion-side outer wall 24. When folding (and thus closing) the pouch 20, the second sealing portion 28 may be folded at least once toward the accommodation portion 22, thereby reducing a width (which may correspond to a size in a direction perpendicular to the longitudinal direction of the secondary battery 1) of the secondary battery 1. For example, the second sealing portion 28 maybe folded twice, according to a double side folding (DSF) method.

FIG. 5 is a schematic partial view of the pouch-type secondary battery showing the vicinity of the folding portion-side outer wall. In particular, FIG. 5 shows a partial cross-sectional side view of the accommodation portion 22 near the fold sidewall 24.

The negative electrode 14 may be larger than the positive electrode 13 in a plan view. In particular, the negative electrode 14 may extend further in the width direction W than the respectively adjacent positive electrode 13. Alternatively or additionally, the negative electrode 14 may extend further in the longitudinal direction L than the respectively adjacent positive electrode 13.

The separator 11 may be larger than the negative electrode 14 in a plan view. The separator 11 may extend further in the width direction W than the respectively adjacent negative electrode 14 and/or the respectively adjacent positive electrode 13. Alternatively or additionally, the separator 11 may extend further in the longitudinal direction L than the respectively adjacent negative electrode 14 and/or the respectively adjacent positive electrode 13.

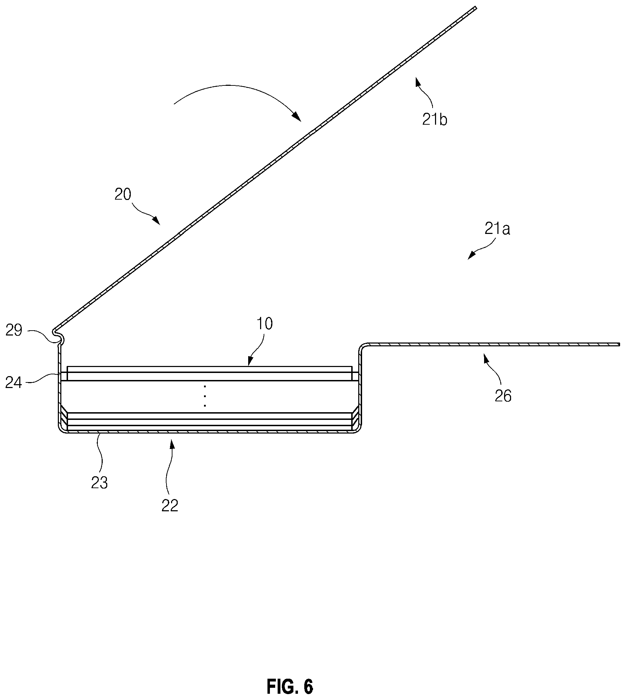

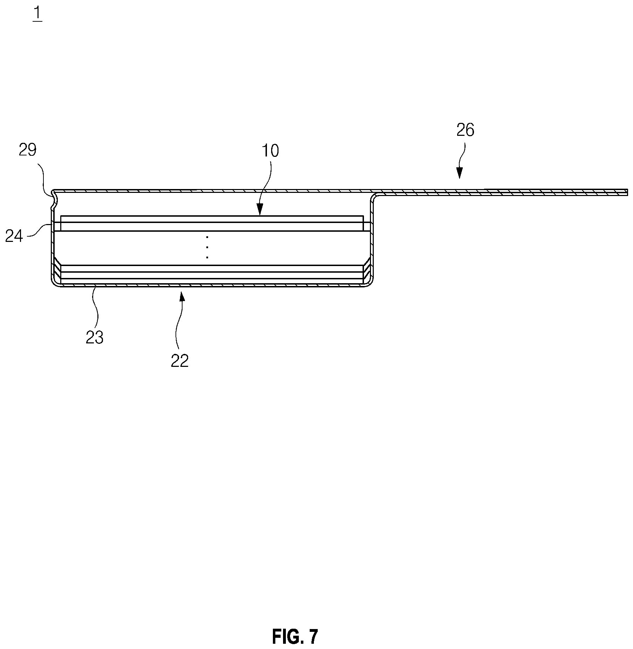

Thus, ends 14a of the negative electrodes 14 may extend further toward the folding portion-side outer wall 24 than ends 13a of the positive electrodes 13. Ends 11a of the separators 11 may extend further toward the folding portion-side outer wall 24 than ends 14a of the negative electrodes 14. The ends 11a of the separators 11 may be in contact with the folding portion-side outer wall 24 (not shown in FIG. 5, see FIG 6 and 7). Here, the ends 11a, 13a and 14a may refer to an end portion of the separator 11, the positive electrode 13 and the negative electrode 14, respectively, proximal to the fold sidewall 24.

The ends 14a of the negative electrodes 14 and the ends 13a of the positive electrodes 13 may be spaced apart from the folding portion-side outer wall 24. In the related art, gaps between ends of negative electrodes and an adjacent outer wall are comparably large. This may deteriorate the compactness of the secondary battery. As a result, a sharpness of an enclosure of the electrode assembly maybe decreased.

In view of this, it is desirable that, while the ends 14a of the negative electrodes 14 may remain spaced apart from the folding portion-side outer wall 24, gaps between the ends 14a of the negative electrodes 14 and the folding portion be reduced as much as possible. Accordingly, the compactness of the secondary battery may be increased. For this purpose, it may be advantageous to improve the formability of a pouch film, which is used as a base structure for forming the pouch 20. The pouch film maybe formed into the pouch 20 through a forming process using a die and a punch. In particular, the material contained in the pouch 20 (i.e., the pouch film) may be selected properly to increase the formability of the pouch 20. Such a material may contain aluminum alloy from alloy no. AA80XX series as disclosed herein. Furthermore, the formability may be increased by a particular thickness ratio of the layers forming the pouch.

Improving the formability of the pouch film reduces a tolerance during the forming process, thereby enabling a more precise manufacturing. Gaps between the ends 14a of the negative electrodes 14 and the folding portion-side outer wall 24 may be reduced. The structure of the pouch film for improving the formability will be described later in detail.

FIG. 6 is a schematic view according a further example showing a state in which a pouch is being folded. FIG. 7 is a schematic view showing a state in which the pouch has been folded and thus closed.

The features described above may apply accordingly to the example shown in FIG. 6 or 7, unless otherwise indicated or structurally inappropriate. Hereinafter, features that are different form the above will be described.

A pouch 20 may comprise a first case 21a and a second case 21b, and a folding portion 29 arranged therebetween. The first case 21a may comprise a cup portion 22, which may be provided in the manner described above. The second case 21b may or may not comprise a cup portion. In the example shown in FIG. 6 and 7, the second case 21b does not have a cup portion. For example, the second case 21b maybe formed as a flat sheet-shaped lid. The pouch 20 may be folded about the folding portion 29 such that the second case 21b covers the opening side of the first case 21a (see FIG. 7).

The second case 21b may have an approximately flat plate shape. After the pouch 20 has been folded about the folding portion 29, a portion of the second case 21b may cover the cup portion 22 of the first case 21a, and an overhang portion of the second case 21b may be fused to a terrace 26 of the first case 21a.

In particular, after an electrode assembly 10 is accommodated in a recessed space Si of the cup portion 22 of the first case 21a, the pouch 20 may be folded about the folding portion 29 so that the second case 21b covers the recessed space Si from above.

A bottom surface of an accommodation portion 22 of the secondary battery 1 may be formed by a bottom portion 23 of the cup portion 22 of the first case 21a. A top surface of the accommodation portion 22 may be formed by the portion of the second case 21b covering the cup portion 22 of the first case 21a.

A sealing portion 26 of the secondary battery 1 may be formed as the terrace 26 of the first case 21a is fused to the overhang portion of the second case 21b. The fusion of the terrace of the first case 21a and the overhang portion of the second case 21b may be as described above with respect to the fusion of the terraces 26 of the cases 21.

A folding portion-side outer wall (fold sidewall 24) of the accommodation portion 22 may be formed by a first surface 24 of the cup portion 22 of the first case 21a and the folding portion 29 in a similar manner as description above. Since the second case 21b does not have a cup portion in the example of FIG, 6 and 7, the folding portion 29 may be positioned in an upper region of the folding portion-side outer wall 24 with respect to the stacking direction of the electrode assembly 10 starting from the bottom portion 23 of the first case 21a.

A sealing portion-side outer wall (sealing sidewall 25) of the accommodation portion 22 may be formed by second surfaces 25 of the cup portion 22 of the first case 21a in a similar manner as described above.

FIG. 8 is a partial cross-sectional view of a pouch film.

The pouch film may a base structure for forming the pouch 20. The pouch 20 may be manufactured by drawing the pouch film. Hereinafter, the pouch film is labelled with 20 (to indicate the correspondence to the pouch 20).

The pouch film 20 may include at least one of: a sealant layer 20a, a moisture barrier layer 20b, a surface protection layer 20c, and a drawing assistance layer 20d. In the example shown in FIG. 8, the pouch film includes all four layers including the sealant layer 20a, the moisture barrier layer 20b, the surface protection layer 20c and the drawing assistance layer 20d in that order. In other examples, some of the four layers 20a-20d may be omitted, and/or the order of the layers 20a-20d may be altered.

The sealant layer 20a may form the innermost layer of the pouch 20, the innermost layer being the closest to the accommodation portion 22. In particular, the sealant layer 20a may provide an inner surface of the pouch 20 facing the accommodation portion 22. The sealant layer 20a may also be an innermost layer of a fused multilayer in the sealing portions 26 (see FIG. 7).

The sealant layer 20a may be electrically insulating, since the sealant layer 20a may be arranged in contact with the electrode assembly 10. The sealant layer 20a may have a good corrosion resistance, since the sealant layer 20a may be arranged in contact with an electrolyte injected into the accommodation portion 22. The sealant layer 20a may provide for sufficient sealing , since the sealant layer 20a may be configured to seal the accommodation portion 22 to prevent leakage of materials from the accommodation portion 22to the outside. Also, the sealing portion 26, in which sealant layers 20a are bonded to each other, may have a sufficient thermal bonding strength for the sealing purpose.

The sealant layer 20a may have a material of a first polymer, and the first polymer may be made of one or more materials selected from the group consisting of polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. In particular, polyolefin-based resin such as polypropylene (PP) or polyethylene (PE) may be a main component in the first polymer. Polypropylene (PP) may provide excellent mechanical properties including tensile strength, rigidity, surface hardness, wear resistance, and thermal resistance, and excellent chemical properties including corrosion resistance. Therefore, polypropylene may be a main component of the sealant layer 20a. A casted polypropylene, acid modified polypropylene, or polypropylene-butylene-ethylene terpolymer may be added. The acid modified polypropylene may be maleic anhydride polypropylene (MAH PP). The sealant layer 20a may have a single layer structure made of a single material, or a composite layer structure, in which two or more materials may constitute respective layers.

The sealant layer 20a may have the thickness of about 60 µm to about 100 µm, or 70 µm to 90 µm, or about 75 µm to about 85 µm, or about 80 µm. If the thickness of the sealant layer 20a is less than about 60 µm, the sealing durability may be deteriorated, and for example, the inside of the sealant layer 20a may break during a sealing process. If the thickness of the sealant layer 20a is greater than about 100 µm, the overall thickness of the pouch may become excessively large. Thus, the energy density to the volume of the secondary battery 1 may be deteriorated.

The moisture barrier layer 20b may be arranged between the surface protection layer 20c and the sealant layer 20a. The moisture barrier layer 20b may ensure the mechanical strength of the pouch 20, block a gas or moisture entering from the outside of the secondary battery 1, and/or prevent the electrolyte from leaking. The moisture barrier layer 20b may be made of metal, in particular aluminum. Aluminum maybe lightweight while ensuring a desired mechanical strength, may also have beneficial electrochemical properties with respect to the electrode assembly 10 and the electrolyte, and may also ensure sufficient heat radiation.

In the related art, an aluminum alloy from alloy no. AA30XX series has been typically used. Here, the iron content may be equal to or less than about 0.7 wt%, and thus the mechanical strength may be low. In order to solve this drawback, the moisture barrier layer 20b may be made of a metal including an aluminum alloy from the alloy no. AA80XX series.

Such aluminum alloy may include various additional materials. For example, the materials may include one or more from iron (Fe), copper (Cu), chrome (Cr), manganese (Mn), nickel (Ni), magnesium (Mg), and zinc (Zn). The aluminum alloy used to manufacture the moisture barrier layer 20b will be described later in detail.

In the related art, a moisture barrier layer may have the thickness of about 30 µm to about 50 µm, and specifically about 40 µm, and the formability may not be satisfactory. Accordingly, as the depth of the cup portion becomes larger, it may be difficult to form a cup portion 22 such that the peripheral portions 24, 25 are as vertical as possible by drawing the pouch film. Also, it may be difficult to reduce a curvature radius of an edge which makes a round connection between a bottom portion 23 and the peripheral portion 24 and 25 of the cup portion 22.

On the other hand, if the thickness of the moisture barrier layer 20b is increased above about 80 µm so as to solve the above limitations, not only does the manufacturing costs may increase, but the overall thickness of the pouch may excessively increase. Thus, the energy density in relation to the volume of the secondary battery 1 may be deteriorated. If the thickness of the sealant layer 20a is reduced to less than about 60 µm to reduce the overall thickness of the pouch, the sealing durability maybe deteriorated as described above.

In order to solve the above limitations, the moisture barrier layer 20b may have a thickness of about 50 µm to about 80 µm, or 60 µm to 70 µm, or about 55 µm to about 65 µm, or about 60 µm. In this manner, the formability of the moisture barrier layer 20b may be enhanced, and accordingly, the cup portion 22 may be formed having a desired depth by drawing the pouch film 20.

Also, the peripheral portions 24 and 25 of the cup portion 22 may be formed so to be approximately vertical. Here, the peripheral portions 24, 25, which may be also referred to herein as outer walls or sidewalls, being vertical may indicate that an inclination angle between the peripheral portions and an adjoining bottom portion (e.g., the bottom portion 23 as shown in the drawings) maybe 80° to 100°, or 85° to 95°, or about 90°.

Further, the curvature radius of the edge connecting between the bottom portion 23 and the peripheral portion 24 and 25 of the cup portion 22, may also be reduced. This and the above technical effects may result in an increase of the compactness of the secondary battery cell.

Accordingly, a filling efficiency in the volume of the recessed space S1 with the electrode assembly 10 may increase. For example, a larger electrode assembly 10 may be accommodated in the pouch. Hence, the energy efficiency with respect to the volume of the secondary battery 1 may increase. At the same time, the manufacturing costs may not significantly increase, and the overall thickness of the pouch may not significantly increase even though the thickness of the sealant layer 20a is not reduced. Further, the sealing durability may not be deteriorated.

The surface protection layer 20C may be provided as an outermost layer of the pouch 20. The surface protection layer 20C may electrically insulate the electrode assembly 10 from the outside. The surface protection layer 20C may protect the secondary battery 1 from friction and collision with the outside. In particular, the surface protection layer 20C may be a layer that determines an external appearance of the pouch 20.

The surface protection layer 20C may be made of a second polymer, and the second polymer may be made of one or more from polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. It may be advantageous to mainly use a polymer having a desirable wear resistance and thermal resistance, such as polyethylene terephthalate (PET). The surface protection layer 20C may have a single layer structure made of a single material, or a composite layer structure, in which two or more materials may constitute respective layers.

The surface protection layer 20C may have a thickness of about 5 µm to about 25 µm, or 5 µm to 20 µm, or 6 µm to 18 µm, or about 7 µm to about 12 µm.If the thickness of the surface protection layer 20C is less than about 5 µm, the insulation from the outside may be deteriorated. On the other hand, if the thickness of the surface protection layer 20C is greater than about 25 µm, the overall thickness of the pouch may become too large, and the energy density with respect to the volume of the secondary battery 1 may be deteriorated.

PET may be a material that is not expensive and has sufficient durability and electrical insulating properties. However, PET may have poor adhesion with aluminum, which is commonly used for the moisture barrier layer 20b. Further, PET may exhibit a different behavior than the aluminum when subjected to stress and being drawn. Thus, when the surface protection layer 20C is bonded directly to the moisture barrier layer 20b, the surface protection layer 20C may be peeled off from the moisture barrier layer 20b during a drawing process. Accordingly, the moisture barrier layer 20b may not be uniformly drawn, and the formability maybe deteriorated.

In order to solve the above limitations, the pouch film 20 may further include the drawing assistance layer 20d arranged between the surface protection layer 20c and the moisture barrier layer 20b.The drawing assistance layer 20d may be arranged stacked between the surface protection layer 20c and the moisture barrier layer 20b to prevent the surface protection layer 20c and the moisture barrier layer 20b from being peeled off during or by a drawing process.

The drawing assistance layer 20d may be made of a third polymer, and the third polymer may be made of one or more from polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. Particularly, a nylon resin may be easily bonded to the polyethylene terephthalate (PET) of the surface protection layer 20c and may exhibit a similar behavior to the aluminum alloy of the moisture barrier layer 20b during and after a drawing process. Thus, a nylon resin may be used as a main component of the third polymer. Also, the drawing assistance layer 20d may have a single layer structure made of one material, or a composite layer structure, in which two or more materials may constitute respective layers.

In the related art, the moisture barrier layer may have a thickness of about 40 µm, and accordingly, the drawing assistance layer may have an extremely small thickness of about 15 µm.As a result, the ratio of thicknesses between the drawing assistance layer and the moisture barrier layer may be about 1 : 2.67, and a proportion of the moisture barrier layer to the thickness may be significantly high.

In contrast, as described above, the moisture barrier layer 20b of the present disclosure may have a thickness of about 50 µm to about 80 µm, or 60 µm to 70 µm, or about 55 µm to about 65 µm, or about 60 µm. Accordingly, the formability of the moisture barrier layer 20b may be enhanced. Here, in order to enhance the formability of the drawing assistance layer 20d, the drawing assistance layer 20d may have the thickness of about 20 µm to about 50 µm, or 22 µm to 40 µm, or about 25 µm to about 38 µm.If the thickness is less than about 20 µm, the drawing assistance layer 20d does not conform to the enhanced formability of the moisture barrier layer 20b and thus may be damaged during or by a drawing process. On the other hand, if the thickness is greater than about 50 µm, the overall thickness of the pouch may become too large, the volume of the secondary battery 1 may increase, and the energy density may be deteriorated. Particularly, the thickness ratio of the drawing assistance layer 20d to the moisture barrier layer 20b maybe less than about 1 : 2.5. Hence, a thickness proportion of the drawing assistance layer 20d may exceed that of the related art. However, when the thickness of the drawing assistance layer 20d excessively increases, the overall thickness of the pouch may become too large. Thus, it may be advantageous that said thickness ratio be greater than about 1 : 1.5 so as to prevent the overall thickness from becoming excessive. In summary, the thickness ratio of the drawing assistance layer 20d to the moisture barrier layer 20b may be about 1 : 1.5 to about 1 : 2.5.

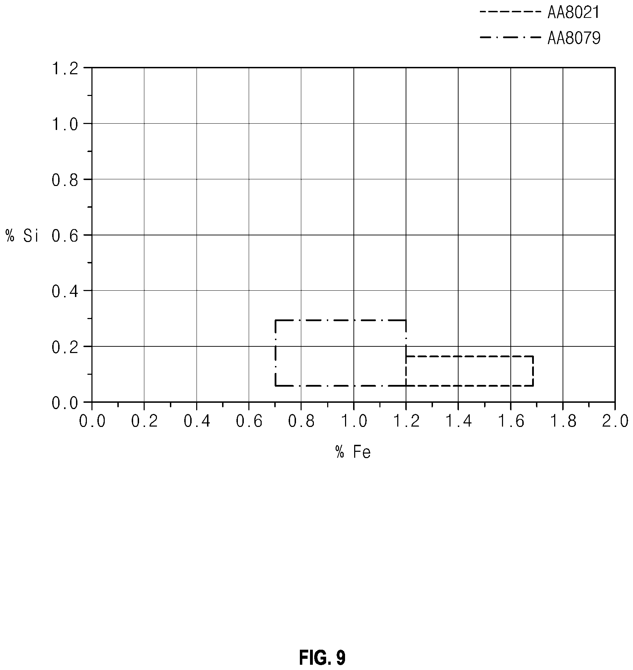

FIG. 9 is a graph showing the iron and silicon contents in an aluminum alloy with the alloy no. AA8079 and an aluminum alloy with the alloy no. AA8021.

The mechanical strength may be enhanced when an amount of iron contained in the aluminum alloy is increased. On the contrary, the flexibility may be enhanced when the amount of iron is reduced. Among the aluminum alloys, the alloy with the alloy no. AA8079 includes about 0.6 wt% to about 1.2 wt% of iron and about 0.3 wt% or less of silicon. When the moisture barrier layer 20b is made of the aluminum alloy with the alloy no. AA8079, the amount of iron contained is relatively small, and thus the flexibility may be enhanced. At the same time, however, the strength may be deteriorated, and the formability may be limited.

The aluminum alloy with the alloy no. AA8021 includes about 1.2 wt% to about 1.7 wt% of iron, specifically about 1.3 wt% to about 1.7 wt% of iron, and about 0.2 wt% or less of silicon. When the moisture barrier layer 20b is made of the aluminum alloy with the alloy no. AA8021, the amount of iron contained is relatively large, and thus a tensile strength and elongation rate may be improved.

When a tensile force is applied to a material, the relationship between the tensile strength and the elongation rate maybe represented in a graph. Here, when the vertical axis of the graph represents a tensile strength and the horizontal axis represents an elongation rate, the area below the graph may represent a toughness of the material. The toughness may represent the ability of the material to withstand fracture. The higher the toughness of a material, the further the material can be drawn without tearing (i.e., breaking, losing integrity of the material structure).

Thus, when the moisture barrier layer 20b is made of the aluminum alloy with the alloy no. AA8021, the tensile strength and elongation rate may be improved. Thus, the toughness may be increased, and the formability may be enhanced.

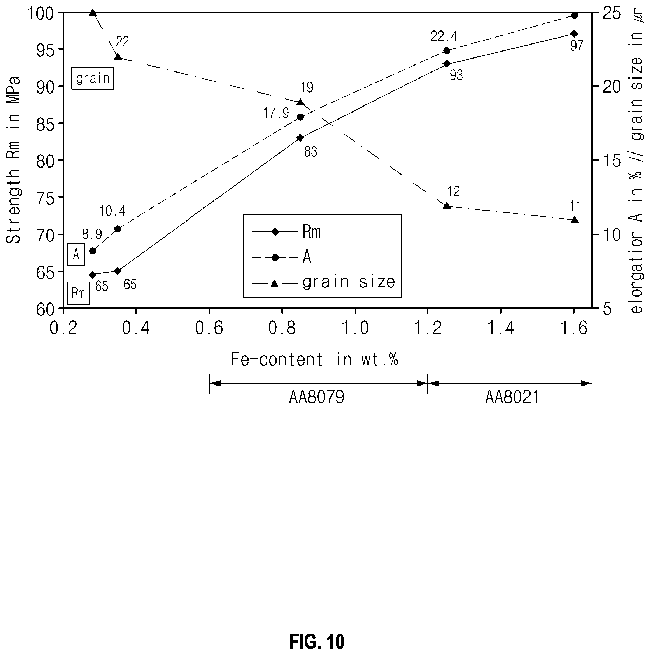

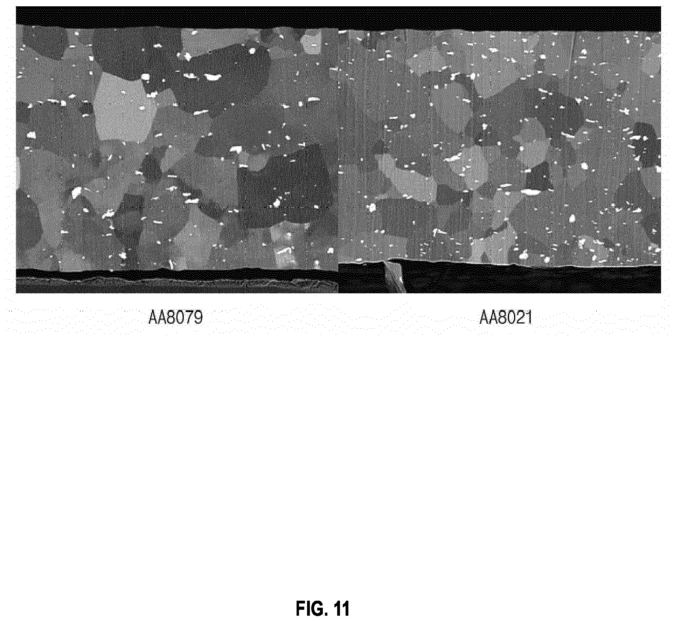

FIG. 10 is a graph showing changes in a tensile strength, an elongation rate, and a grain size according to the iron content in the aluminum alloys with the alloy no. AA8079 and the alloy no. AA8021. FIG. 11 is an enlarged SEM image of grains of the aluminum alloys with the alloy no. AA8079 and the alloy no. AA8021.

As illustrated in FIG. 10, the tensile strength, the elongation rate, and the grain size may change as a function of the iron content in the aluminum alloy. Specifically, the tensile strength and elongation rate may be proportional to the iron content. Accordingly, the tensile strength and elongation rate may increase as the iron content increases. On the other hand, the grain size may be inversely proportional to the iron content. Accordingly, the grain size may decrease as the iron content increases.

As described above, the aluminum alloy with the alloy no. AA8079 may include about 0.6 wt% to about 1.2 wt% of iron, and thus the grain size may be relatively large, for example, about 13 µm to about 21 µm, as illustrated in FIG. 11. Thus, the internal stress may be less dispersed during a drawing process, and the number of pin holes (which may correspond to a degree of porosity) may increase. Thus, the formability of the pouch film 20 maybe deteriorated.

On the other hand, the aluminum alloy with the alloy no. AA8021 may include about 1.2 wt% to about 1.7 wt% of iron, and thus the grain size may be comparably small, for example, about 10 µm to about 13 µm as illustrated in FIG. 11. Thus, the internal stress may be better dispersed during a drawing process, and the number of pin holes (which may correspond to a degree of porosity) may decrease. Thus, the formability of the pouch film 20 maybe enhanced.

Thus, the aluminum alloy forming the moisture barrier layer 20b may include about 1.2 wt% to about 1.7 wt% of iron, and particularly about 1.3 wt% to about 1.7 wt% of iron. The aluminum alloy may also include about 0.2 or less wt% of silicon. The grain size may be about 10 µm to about 13 µm.That is, the aluminum alloy used to manufacture the moisture barrier layer 20b may be the alloy no. AA8021.

The formability of the moisture barrier layer 20b may be enhanced, and accordingly, the cup portion 22 of the pouch 20 may be formed with a greater depth. Furthermore, the peripheral portions 24 and 25 of the cup portion 22 may become approximately vertical. The curvature radius of the edge connecting between the bottom portion 23 and the peripheral portion 24 and 25 of the cup portion 22 may also be reduced. As a result, it may be possible to accommodate a larger and/or thicker electrode assembly 10. Therefore, the secondary battery 1 including the pouch 20 may have an increased energy efficiency with respect to the volume.

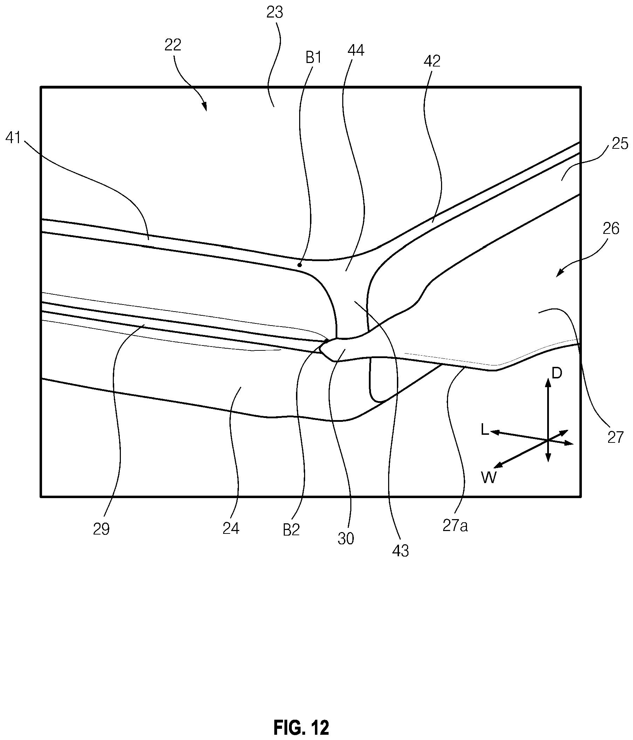

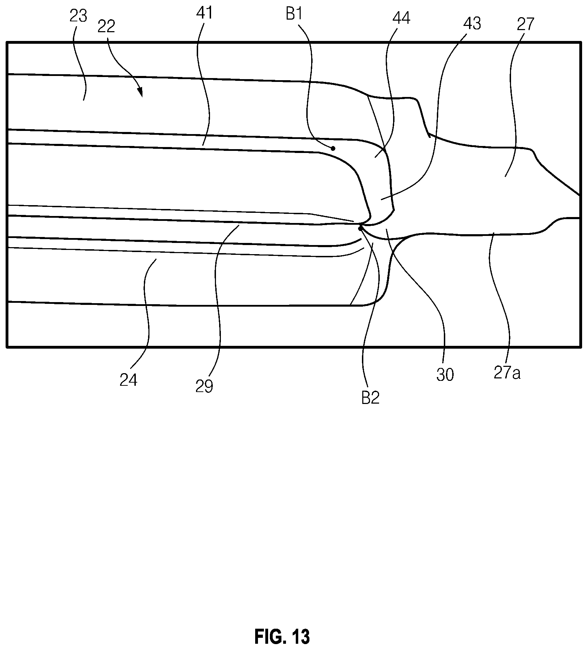

FIG. 12 is a perspective view illustrating a portion of an appearance of a pouch-type secondary battery. FIG. 13 is another perspective view of the pouch-type secondary battery of FIG. 12 when viewed in a different direction. Any of the features described above may also apply to the example shown in FIG. 12 and 13 unless indicated otherwise or unless structurally inappropriate. As mentioned above, same or like reference signs indicate same or like features.

An accommodation portion 22 may include a first edge 41, a second edge 42, a third edge 43 and a corner 44. The first edge 41 may connect between a top surface or a bottom surface 23 of the accommodation portion 22 and a folding portion-side outer wall 24. The second edge 42 may connect between the top surface or the bottom surface 23 of the accommodation portion 22 and a sealing portion-side outer wall 25. The third edge 43 may connect between the folding portion-side outer wall 24 and the sealing portion-side outer wall 25. The corner 44 may be connected with the first edge 41, the second edge 42, and the third edge 43.

The first edge 41, the second edge 42, and the third edge 43 may be rounded. In particular, each of the edges 41, 42, and 43 may have a curved shape having a respective curvature radius, which may be constant or variable along a circumferential direction of the curvature.

The first edge 41 may provide a round connection between the top or bottom surface 23 of the accommodation portion 22 and the folding portion-side outer wall 24 (fold sidewall 24). The first edge 41 may extend in the longitudinal direction L of the accommodation portion 22 and may maintain a substantially constant curvature radius along the longitudinal direction.

The second edge 42 may provide a round connection between the top or bottom surface 23 of the accommodation portion 22 and the sealing portion-side outer wall 25 (sealing sidewall 25). The second edge 42 may extend in the width direction W of the accommodation portion 22 and may maintain a substantially constant curvature radius along the width direction W.

The third edge 43 may provide a round connection between the folding portion-side outer wall 24 and the sealing portion-side outer wall 25 and between the first edge 41 and the second edge 42. The third edge 43 may extend in the depth direction D of the accommodation portion 22, which maybe parallel to the stacking direction of an electrode assembly 1. The third edge 43 may have a substantially constant curvature radius along the depth direction D.

The curvature radius of the third edge 43 may be greater than the curvature radius of the first edge 41 and greater than the curvature radius of the second edge 42. The curvature radius of the first edge 41, the second edge 42 and the third edge 43 may be determined in a cross-sectional plane perpendicular to the longitudinal direction L, the width direction W and the depth direction D, respectively.

The corner 44 may be formed by connecting the first edge 41, the second edge 42, and the third edge 43. In order for excessive stress to be concentrated on the corner 44 during a process for forming a pouch 20, the corner 44 may have a curved shape which is rounded in the round direction of each of the first edge 41, the second edge 42, and the third edge 43. As such, the corner 44 may be curved according to a superposition of the curvatures of the first edge 41, the second edge 42 and the third edge 43.

The curvature radius of the corner 44 may increase in a direction from a peripheral region to a central region. Thus, a boundary B1 between the corner 44 and each of the edges 41, 42, and 43 may be defined as a position at which the curvature radius begins to change significantly (e.g., significantly deviate from the substantially constant curvature radius of the respective edge 41, 42, 43). The boundary B1 between the corner 44 and the first edge 41, the second edge 42 and the third edge 43 may be defined to be at a predetermined position along the longitudinal direction L, the width direction W and the depth direction D, respectively. Alternatively, the boundary B1 maybe defined as the position as specified above.

In particular, the curvature radius may increase along the longitudinal direction L from a boundary B1 between the first edge 41 and the corner 44 toward the central region of the corner 44.

The curvature radius may increase along the width direction W from a boundary between the second edge 42 and the corner 44 toward the central region of the corner 44.

The curvature radius may increase along the depth direction from a boundary between the third edge 43 and the corner 44 toward the central region of the corner 44.

The pouch 20 may include a protrusion portion 30 which connects between an edge of a sealing portion 26 and the folding portion-side outer wall 24. The protrusion portion 30 may protrude further in the width direction W than the edge of the sealing portion 26 of the accommodation portion 22.

The protrusion portion 30 may connect between an edge 27a of a first sealing portion 27 and a folding portion 29. The protrusion portion 30 may protrude convexly outward from the accommodation portion 22 in the width direction W. The protrusion portion 30 may be curved in an upward or downward direction (i.e., in the depth direction D).

While the pouch 20 is formed, the drawing is not limited to the cup portion 22, but a region of a terrace 26 adjacent to the cup portion 22 may also be in whole slightly drawn. Thus, during manufacturing the secondary battery 1, when folding about the folding portion 29, said slightly drawn regions are accumulated to form the protrusion portion 30.

The protrusion portion 30 may be connected between the folding portion-side outer wall 24 and the folding portion 29. The folding portion 29 may have a groove shape extending from one end portion to the other end portion of the folding portion-side outer wall 24.

A boundary B2 between the protrusion portion 30 and the folding portion 29 may be located further outward in the longitudinal direction L than the boundary B1 between the first edge 41 and the corner 44. The boundary B2 between the protrusion portion 30 and the folding portion 29 may be located in the depth direction D so as to overlap the corner 44. The protrusion portion 30 may be located such to be spaced apart from the first edge 41 between either of the top and bottom portion 23 and the fold sidewall 24.

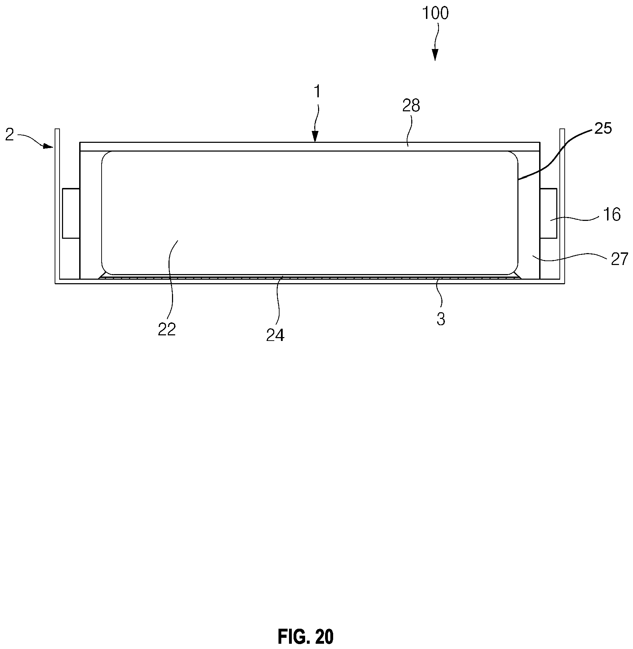

The above may be achieved by improving the formability of the pouch film 20 when compared to the related art. In particular, a length or size of the protrusion portion 30 may be reduced or minimized, which may provide the secondary battery 1 with a sharp appearance. The secondary battery 1 may have an enhanced energy density as discussed above. In addition, the cooling efficiency by a cooling unit 3 (see FIG. 20) may be enhanced in a battery module 100 (see FIG. 20) which will be described later.

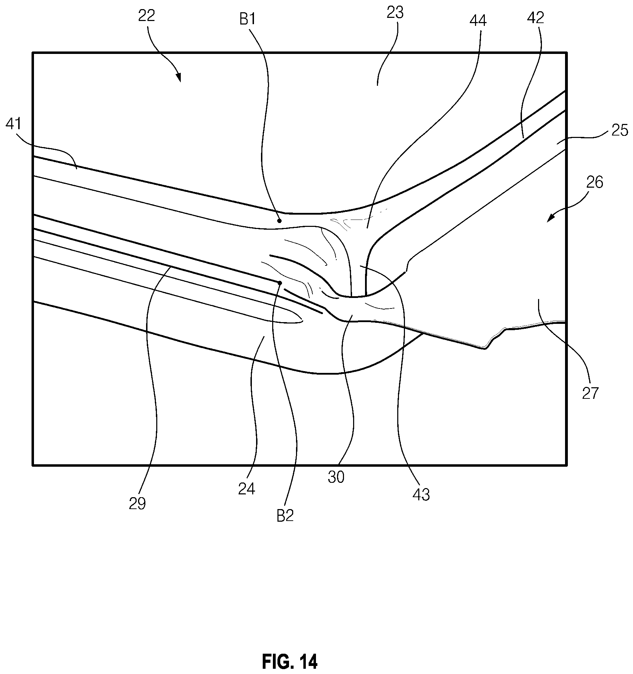

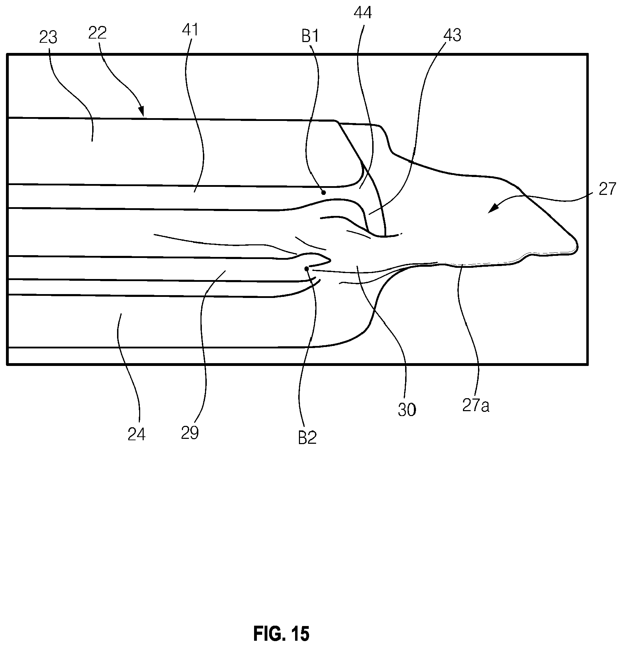

FIG. 14 is a perspective view illustrating a portion of an appearance of a pouch-type secondary battery according to the related art. FIG. 15 is a view of the pouch-type secondary battery of FIG. 14 when viewed in a different direction.

A secondary battery according to the related art will be described with reference to FIGS. 14 and 15 as a comparative example. For easy understanding, the same reference numeral as each of the components of the secondary battery 1 of the present invention will be used in the following description.

In the secondary battery according to the related art, due to poor formability of a pouch 20, each of the first edge 41, the second edge 42, and the third edge 43 has a relatively large curvature radius. Thus, there is a limitation in forming a sharp appearance, and wrinkling or creasing occurs, as depicted in FIG. 14 and 15.

Also, the wrinkling may occur at an end portion of each of a folding portion-side outer wall 24 and a sealing portion-side outer wall 25, and accordingly, at least one of the first edge 41, the second edge 42, and the third edge 43 may have a curvature radius which varies excessively along the longitudinal direction L, the width direction W and the depth direction D.

For example, the wrinkling may occur at the end portion of the folding portion-side outer wall 24, and accordingly, the curvature radius of the first edge 41 adjacent to a corner 44 may sharply increase or decrease. Thus, the shape of the corner 44 may be irregularly deformed.

Also, a groove shape formed by a folding portion 29 may not reach an end portion of the folding portion-side outer wall 24 but disappear before it. A protrusion portion 30 may not extend to the folding portion-side outer wall 24 or to the folding portion 29. Even if the protrusion portion 30 extended to the folding portion 29, a boundary B2 between the protrusion portion 30 and the folding portion 29 may be positioned further outward in the longitudinal direction L than a boundary B1 between the first edge 41 and the corner 44. Accordingly, the boundary B2 between the protrusion portion 30 and the folding portion 29 may be positioned such as to overlap the first edge 41 in the depth direction D. Hence, such a secondary battery may be bulkier and include more dead space.

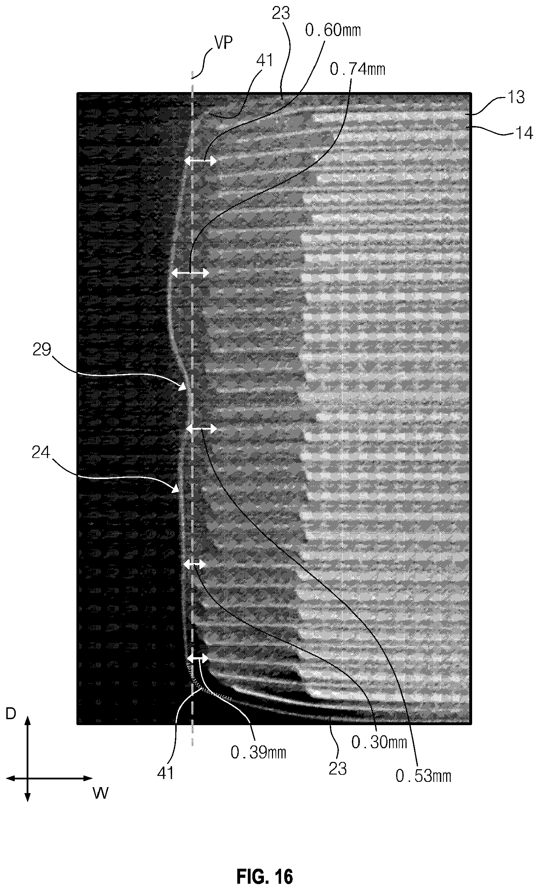

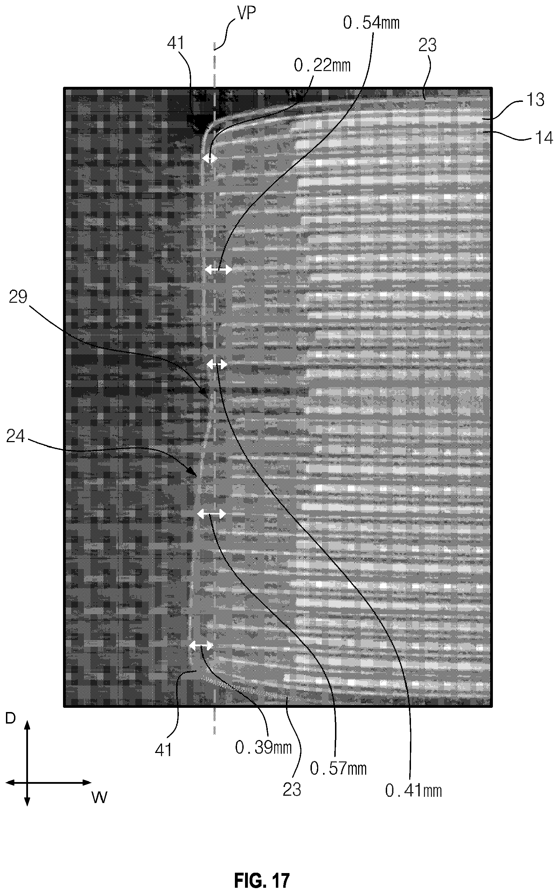

FIGS. 16 and 17 are CT images for measuring a distance between a folding portion-side outer wall (fold sidewall) and a negative electrode.

FIG. 16 is a computerized tomography (CT) image measured at a first location P1 as shown in FIG. 4. FIG. 17 is a CT image measured at a second location P2 as shown in FIG. 4. Measuring the distance between a folding portion-side outer wall 24 and a negative electrode 14 is not limited to CT imaging. The distance may be measured through any proper method, such as magnetic resonance imaging (MRI) or X-ray.

The subject matter disclosed herein may improve the formability of the pouch 20. The ends 14a of the negative electrodes 14 (see FIG. 5) and the folding portion-side outer wall 24 may be spaced apart from each other. The improved formability of the pouch may allow distances between the folding portion-side outer wall 24 (fold sidewall 24) and (the ends 14a of) the negative electrodes 14 to be reduced compared to the related art, and in particular to be minimized. Here, the distances may extend within a respective gap (which may be filled with an electrolyte) in the accommodation portion 22 between the negative electrodes 14 and the nearest sidewall, which may be the fold sidewall 24. The distances may be determined in the width direction W. Alternatively or additionally (optionally), the distances may be determined in the longitudinal direction L, if referring to a gap between the negative electrodes 14 and one of the sealing sidewalls 25 extending in a plane spanned by the width direction W and the depth direction D.

The distance between an end 14a of a negative electrode 14 and the folding portion-side outer wall 24 may be less than the distance between the end 14a of the negative electrode 14 and an end 13a of a positive electrode 13. The distance between the end 14a of the negative electrode 14 and an end 13a of a positive electrode 13 may be determined in the width direction W.

The distance between the end 14a of the negative electrode 14 and the folding portion-side outer wall 24 may be smaller than half the distance between the end 14a of the negative electrode 14 and the end 13a of the positive electrode 13. The distance between the end 14a of the negative electrode 14 and the end 13a of the positive electrode 13 may be determined in the width direction W.

The distance between the end 14a of the negative electrode 14 and the folding portion-side outer wall 24 may be smaller than half the distance by which the negative electrode 14 protrudes from the positive electrode 13 toward the folding portion-side outer wall 24. In other words, a distance between the ends of the negative electrodes 14 and the positive electrodes 13 in the width direction W may be at least twice as large as a distance between the ends 14a of the negative electrodes 14 and the fold sidewall 24. This may be directly confirmed with naked eyes in FIGS. 16 and 17.

A gap (dead space) within the pouch 20 may be minimized. This may increase a cooling efficiency by a cooling unit 3 (see FIG. 20), which will be described later. Further, the energy density of the secondary battery 1 may increase.

An average distance between the ends 14a of the negative electrodes 14 and the folding portion-side outer wall 24 may be about 0.6 mm or less, about 0.55 mm or less, or about 0.5 mm or less. The average distance may represent an average over all measurements at a given location in the longitudinal direction L. In particular, the average distance may or may not depend on the location in the longitudinal direction L. Additionally or alternatively, the average distance may refer to an average over the distances between all the negative electrodes 14 and the fold sidewall 24.

A maximum distance between the end 14a of the negative electrodes 14 and the folding portion-side outer wall 24 may be about 0.8 mm or less. If the maximum distance is greater than about 0.8 mm, and when the average distance is about 0.6 mm or less, the deviation of distances between the end 14a of the negative electrodes 14 and the folding portion-side outer wall 24 may become excessively large, and the enclosure of the secondary battery 1 may become nonuniform. This may decrease the compactness of the secondary battery.

Any of average distances measured at distinct locations along the longitudinal direction L of the folding portion-side outer wall 24 may be about 0.6 mm or less, or 0.55 mm or less, or 0.5 mm or less.

A total average distance, which may be an average over multiple average distances, may be about 0.5 mm or less, or 0.48 mm or less, or 0.45 mm or less. The total average distance may refer to an average over the average distances measured at least two distinct locations along the longitudinal direction L.

For example, an average distance between the ends 14a of the negative electrodes 14 and the folding portion-side outer wall 24 at a first location P1 (see FIG. 4) close to one end portion of the folding portion-side outer wall 24may be referred to as a first distance. The average distance between the ends 14a of the negative electrodes 14 and the folding portion-side outer wall 24 at a second location P2 (see FIG. 4) close to the other end portion of the folding portion-side outer wall 24 may be referred to as a second distance. Each of the first distance and the second distance may be about 0.6 mm or less. The average of the first distance and the second distance, which may be considered as the total average distance, may be about 0.5 mm or less. This consideration may apply to any location along the longitudinal direction L.

Accordingly, gaps between the ends 14a of the negative electrodes 14 and the folding portion-side outer wall 24 may be maintained small.

If the total average distance is greater than about 0.5 mm, a void space within the pouch 20 may become large. Accordingly, the cooling efficiency by a cooling unit 3 (see FIG. 20), which will be described later, may be deteriorated. Also, the energy density of the secondary battery 1 may be reduced.

Also, when the average distance is greater than about 0.6 mm at even one location of the folding portion-side outer wall 24, this location may protrude from the surroundings. Accordingly, there is a limitation in obtaining the secondary battery 1 having a flat sidewall, reducing the compactness of the secondary battery 1. Also, such protrusion may not be properly cooled by the cooling unit 3 (see FIG. 20) which will be described later, and thus the temperature at this location may raise locally.

Referring to FIGS. 16 and 17 as an experimental example, it was confirmed that, at the first location Pi, the distances between the folding portion-side outer wall 24 and the five negative electrodes 14, which are spaced apart from each other in the stacking direction of the electrode assembly 10, were measured to be about 0.60 mm, 0.74 mm, 0.53 mm, 0.30 mm, and 0.39 mm. Thus, the maximum distance was about 0.74 mm, and the average distance was about 0.51 mm.

Also, it was confirmed that, at the second location P2, the distances between the folding portion-side outer wall 24 and the five negative electrodes 14, which are spaced apart from each other in the stacking direction of the electrode assembly 10, were measured to be about 0.22mm, 0.54 mm, 0.41mm, 0.57mm, and 0.39 mm. Thus, the maximum distance was about 0.57 mm, and the average distance was about 0.43 mm.

Thus, it was confirmed that the total average distance of the first location P1 and the second location P2 was about 0.47 mm. As mentioned above, the total average distance may refer to an average over multiple average distances measured at distinct locations (such as P1 and P2) along the longitudinal direction L, and may also refer to an average over two average distances.

Accordingly, it may be demonstrated that the maximum distance at each of the locations P1 and P2 is about 0.8 mm or less, the average distance at each of the locations P1 and P2 is about 0.6 mm or less, and the total average distance is about 0.5 mm or less.

A virtual line VP may be drawn so as to contact the innermost side of the folding portion 29 and to be parallel to the depth direction D. The virtual line VP may pass through at least one of the top surface 23, the bottom surface 23, or the first edge 41 of the accommodation portion 22.

In the example shown in FIG. 16, the virtual line VP passes through the first edge 41 at the first location P1. In FIG. 17, the virtual line VP passes through the top and bottom surfaces 23 of the accommodation portion 22 at the second location P2.

This configuration may be obtained by improving the formability of the pouch 20 as disclosed herein. Accordingly, the void space within the pouch 20 may be minimized, the cooling efficiency by the cooling unit 3 (see FIG. 20, described in detail later) may increase, and the energy density of the secondary battery 1 may increase.

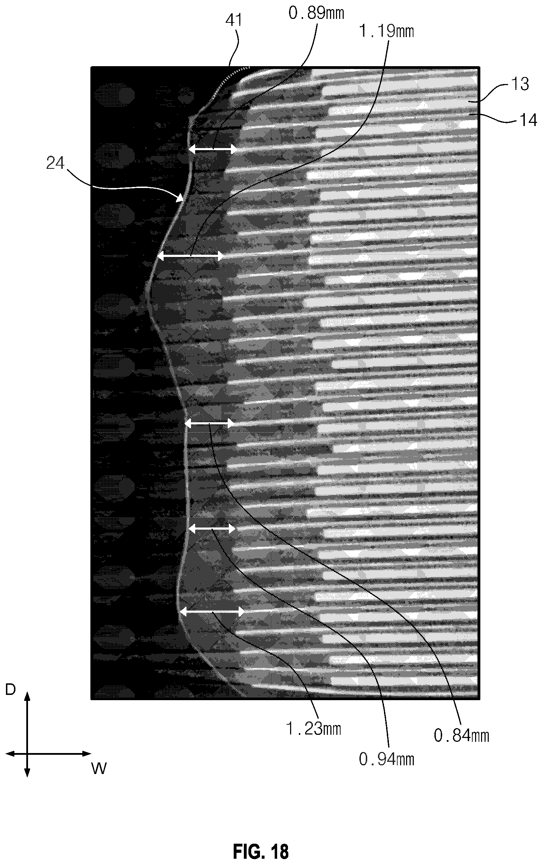

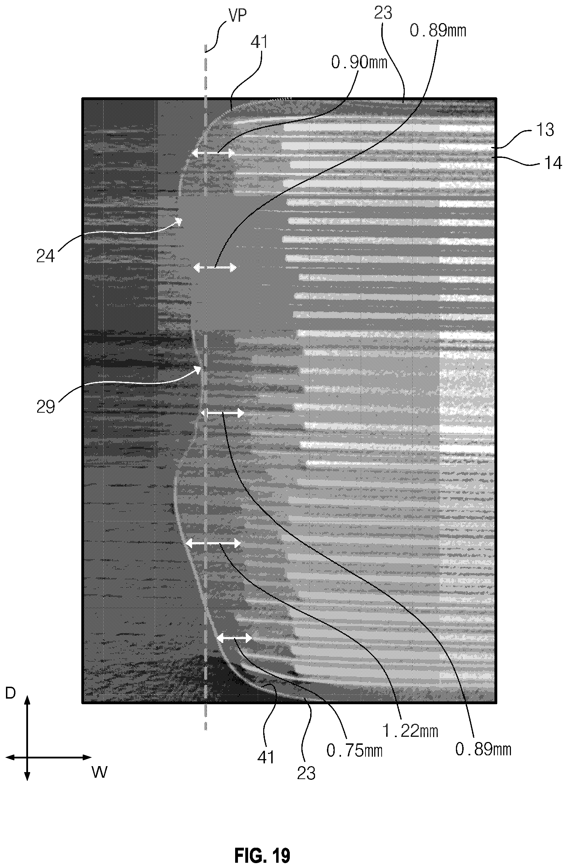

FIGS. 18 and 19 are CT images in which a distance between a pouch and a negative electrode according to the related art is measured.

In more detail, FIG. 18 is a CT image in which a region corresponding to the first location P1 is measured in a secondary battery of the related art, and FIG. 19 is a CT image in which a region corresponding to the second location P2 is measured in the secondary battery of the related art.

Referring to FIGS. 18 and 19 as a comparative example, it may be confirmed that the distance between an end 14a of a negative electrode 14 and a folding portion-side outer wall 24 is greater than half the distance between the end 14a of the negative electrode 14 and end 13a of a positive electrode 13. It may be confirmed that the distances between ends 14a of some negative electrodes 14 and the folding portion-side outer wall 24 are even greater than the distances between the ends 14a of the negative electrodes 14 and ends 13a of positive electrodes 13.

Thus, in the secondary battery according to the related art, large void spaces may be created between the electrodes and the fold sidewall within a pouch 20. Thus, the cooling efficiency of the secondary battery may be deteriorated, and the energy density may be reduced.

Further referring to FIG. 18, at the first location Pi, the distances between the folding portion-side outer wall 24 and the five negative electrodes 14, which are spaced apart from each other in the stacking direction of the electrode assembly 10, were measured to be about 0.89 mm, 1.19 mm, 0.84 mm, 0.94 mm, and 1.23 mm. Thus, the maximum distance was about 1.23 mm, and the average distance was about 1.01 mm.

Referring to FIG. 19, at the second location P2, the distances between the folding portion-side outer wall 24 and the five negative electrodes 14, which are spaced apart from each other in the stacking direction of the electrode assembly 10, were measured to be about 0.90 mm, 0.89 mm, 0.89 mm, 1.22 mm, and 0.75 mm. Thus, the maximum distance was about 1.22 mm, and the average distance was about 0.93 mm.

Thus, the total average distance of the regions respectively corresponding to the first location P1 and the second location P2 was about 0.97 mm. Hence, the comparative examples may have a maximum distance of greater than about 0.8 mm at any measurement location, an average distance of greater than about 0.6 mm at any measurement location, and a total average distance of greater than about 0.5 mm.

Further referring to FIG. 18, a groove shape of a folding portion 29 disappeared at the first location P1 due to wrinkling of the folding portion-side outer wall 24. Thus, it is difficult or impossible to draw a virtual line VP as defined above.

Referring to FIG. 19, the virtual line VP may be defined at the second location P2. As shown in FIG. 19, the virtual line VP does not pass through the top surface 23, bottom surface 23, or first edge 41 of the accommodation portion 22. Instead, the virtual line VP in FIG. 19 passes through the folding portion-side outer wall 24. This is due to the low formability of the pouch 20. Accordingly, the folding portion-side outer wall 24 may not be formed to be approximately vertical. Also, the curvature radius of the first edge 41 was large in the example of FIG. 19.

FIG. 20 is a schematic view of a battery module.

Secondary batteries 1 may be used in medium and large sized electronic devices, such as automobiles, which may require high energy output. In order to easily move and install the secondary batteries 1, a battery module 100 may be manufactured that contains multiple secondary batteries 1.

The battery module 100 may include secondary batteries 1, a housing 2 to accommodate the secondary batteries 1, and a cooling unit 3. The cooling unit 3 may be provided on a bottom surface inside the housing 2 and configured to cool the secondary batteries 1.

The housing 2 may approximately have a box shape without being limited thereto. The appearance of the battery module 100 may be determined by the housing 2.

The secondary batteries 1 may be stacked within the housing 2 and stand vertically. The secondary batteries 1 may stand on the respective folding portion-side outer wall 24, i.e., such that the respective folding portion-side outer wall 24 (fold sidewall 24) faces downward and a respective expansion portion 28 faces upward, in the orientation of FIG. 20 or with respect to the gravity. Thus, the folding portion-side outer wall 24 may come into contact with the cooling unit 3. The folding portion-side outer wall 24 may be formed to be longer than the second sealing portion 28. Thus, the cooling efficiency of each of the secondary batteries 1 by the cooling unit 3 may be enhanced.

An electrode lead 16 may protrude from each of the secondary batteries 1, e.g., from a respective end face side. The electrode lead 16 may be connected to a bus bar (not shown) or electrical connectors to transmit power to the outside.

The cooling unit 3 may be adjacent to folding portion-side outer walls 24 of the secondary batteries 1 to cool the secondary batteries 1. The cooling unit 3 may contribute to dissipating heat generated through a chemical reaction while electricity is generated in an electrode assembly 10 of the secondary battery 1.

The folding portion-side outer wall 24 of each of the secondary batteries 1 may be in direct contact with the cooling unit 3. Alternatively or additionally, a medium such as thermal grease may be provided between the folding portion-side outer wall 24 and the cooling unit 3 to promote heat transfer.

The cooling unit 3 may have an approximately plate shape, and may be manufactured separately from the housing 2 and disposed on the bottom surface inside the housing. Also, it is also possible that the cooling unit 3 forms the bottom surface of the housing 2.

The cooling unit 3 may operate in an air or water cooling method, and the configuration and method thereof are not limited. As one example, a flow path through which cooling water flows may be formed inside the cooling unit 3 having the plate shape.

As described above, the distance between the folding portion-side outer wall 24 and the negative electrodes 14 in each of the secondary batteries 1 may be reduced or minimized. This may allow for an effective cooling of the electrode assemblies 10 by the cooling unit 3. Accordingly, it may be possible to prevent a malfunction due to high temperature occurring in an electronic device where the secondary batteries 1 are installed. Also, it may be possible to prolong a lifespan of the electronic device by preventing adverse effects caused by high temperatures.

Also, as described above, the protrusion portion 30 of each of the secondary batteries 1 may be made smaller or minimized. Thus, even if a gap is formed by the protrusion portion 30 between the folding portion-side outer wall 24 and the cooling unit 3, such gap may be small compared to the related art. Thus, an amount of a medium such as thermal grease to be injected into the gap may be reduced.

The formability of the pouch as disclosed herein may be improved, and thus, the distance between the electrodes and the pouch may be reduced compared to the related art. Accordingly, the compactness of the secondary battery may be increased. The appearance of the secondary battery may be formed to be sharp and pleasing.

Also, the void space within the pouch may be reduced, and thus, the energy density of the secondary battery may be enhanced.

Also, the cooling efficiency of the electrode assembly may be enhanced in the battery module by the cooling unit.

The technical ideas of the present invention have been described merely for illustrative purposes, and those skilled in the art will appreciate that various changes and modifications are possible without departing from the essential features of the present invention. Thus, the examples depicted in the drawings and described herein are to be considered illustrative, and not restrictive, and the technical spirit of the present invention is not limited to the foregoing embodiments.

The scope of the present invention is defined by the appended claims. All technical ideas within their equivalents should be interpreted to be included in the scope of the present invention.

## Claims

1. A pouch-type secondary battery (1) comprising:
an electrode assembly (10) in which positive electrodes (13) and negative electrodes (14) are alternately stacked with separators (11) therebetween; and
a pouch (20) which is formed by sealing a pair of cases (21; 21a, 21b) integrally connected via a folding portion (29) and comprises an accommodation portion (22) to accommodate the electrode assembly (10),
wherein the pouch (20) further comprises outer walls (24, 25) forming a peripheral surface of the accommodation portion (22), the outer walls (24, 25) comprising:
- a folding portion-side outer wall (24) comprising the folding portion (29); and
- a sealing portion-side outer wall (25) connected to a sealing portion (26) in which the pair of cases (21) are fused,
wherein an average distance between ends (14a) of the negative electrodes (14) and the folding portion-side outer wall (24) is 0.6 mm or less.

2. The pouch-type secondary battery of claim 1,
wherein any average distance between the ends (14a) of the negative electrodes (14) and the folding portion-side outer wall (24) determined at distinct locations along a longitudinal direction (L) of the pouch (20) is about 0.6 mm or less, and/or
wherein a total average distance is about 0.5 mm or less, wherein the total average distance indicates an average over multiple average distances determined at distinct locations along the longitudinal direction (L).

3. The pouch-type secondary battery of claim 1 or 2, wherein a maximum distance between ends (14a) of the negative electrodes (14) and the folding portion-side outer wall (24) is about 0.8 mm or less.

4. The pouch-type secondary battery of any of the preceding claims,
wherein the ends (14a) of the negative electrodes (14) extend further toward the folding portion-side outer wall (24) than ends (13a) of the positive electrodes (13),
wherein the average distance between the ends (14a) of the negative electrodes (14) and the folding portion-side outer wall (24) is less than an average distance between the ends (14a) of the negative electrodes (14) and the ends (13a) of the positive electrodes (13).

5. The pouch-type secondary battery of any of the preceding claims, wherein a distance between each of the ends (14a) of the negative electrodes (14) and the folding portion-side outer wall (24) is less than half a distance between each of the ends (14a) of the negative electrodes (14) and each of ends (13a) of the positive electrodes (13).

6. The pouch-type secondary battery of any of the preceding claims, wherein the folding portion (29) has a groove shape extending between end portions of the folding portion-side outer wall (24).

7. The pouch-type secondary battery of any of the preceding claims, wherein the accommodation portion (22) comprises:
a first edge (41) rounded and connecting between a top surface (23) or a bottom surface (23) of the accommodation portion (22) and the folding portion-side outer wall (24);
a second edge (42) rounded and connecting between the top surface (23) or the bottom surface (23) of the accommodation portion (22) and the sealing portion-side outer wall (25);
a third edge (43) rounded and connecting between the folding portion-side outer wall (24) and the sealing portion-side outer wall (25); and
a corner (44) connected with the first edge (41), the second edge (42), and the third edge (43).

8. The pouch-type secondary battery of claim 7,
wherein a virtual line (VP) is drawn so as to contact an innermost point of the folding portion (29) and to be parallel to a stacking direction (D) of the electrode assembly (10),
wherein the virtual line (VP) passes through at least one of the top surface (23), the bottom surface (23), or the first edge (41) of the accommodation portion (22).

9. The pouch-type secondary battery of claim 7 or 8, wherein a curvature radius of the third edge (43) is greater than a curvature radius of the first edge (41) and a curvature radius of the second edge (42).

10. The pouch-type secondary battery of any of claims 7 to 9, wherein a curvature radius of the corner (44) increases in a direction from a peripheral region to a central region.

11. The pouch-type secondary battery of any of claims 7 to 10,
wherein the pouch (20) comprises a protrusion portion (30) which connects between an edge of the sealing portion (26) and the folding portion (29) and protrudes further in a width direction (W) than the edge of the sealing portion (26),
wherein a boundary (B2) between the protrusion portion (30) and the folding portion (29) is positioned further outward in a longitudinal direction (L) than a boundary (Bi) between the first edge (41) and the corner (44).

12. The pouch-type secondary battery of any of the preceding claims, wherein the pouch (20) is manufactured from a pouch film, wherein the pouch film comprises:
a sealant layer (20a) made of a first polymer and formed as an innermost layer;
a surface protection layer (20c) made of a second polymer and formed as an outermost layer; and
a moisture barrier layer (20b) which is made of metal including an aluminum alloy from a series with the alloy no. AA80XX and stacked between the surface protection layer (20c) and the sealant layer (20a),
wherein a thickness of the moisture barrier layer (20b) is 50 µm to 80 µm,
wherein a thickness of the sealant layer (20a) is 60 µm to 100 µm.

13. The pouch-type secondary battery of claim 12, wherein the aluminum alloy is AA8021.

14. The pouch-type secondary battery of claim 12 or 13, wherein the aluminum alloy comprises 1.3 wt% to 1.7 wt% of iron and 0.2 wt% or less of silicon, and has a grain size of 10 µm to 13 µm.

15. The pouch-type secondary battery of any of claims 12 to 14, #
wherein the thickness of the moisture barrier layer (20b) is about 55 µm about 65 µm, and
wherein the thickness of the sealant layer (20a) is about 75 µm to about 85 µm.

16. The pouch-type secondary battery of any of claims 12 to 15, wherein the pouch film further comprises a drawing assistance layer (20d) which is made of a third polymer and stacked between the surface protection layer (20c) and the moisture barrier layer (20b).

17. The pouch-type secondary battery of claim 16, wherein a thickness of the drawing assistance layer (20d) is about 20 µm to about 50 µm.

18. A pouch-type secondary battery comprising:
an electrode assembly (10) in which positive electrodes (13) and negative electrodes (14) are alternately stacked with separators (11) therebetween; and
a pouch (20) which is formed by sealing a pair of cases (21) integrally connected via a folding portion (29) and comprises an accommodation portion (22) that accommodates the electrode assembly (10),
wherein the pouch (20) further comprises outer walls (24, 25) forming a peripheral surface of the accommodation portion (22), wherein the outer walls (24) comprise:
- a folding portion-side outer wall (24) comprising the folding portion (29); and
- a sealing portion-side outer wall (25) connected to a sealing portion (26) in which the pair of cases (21) are fused,
wherein ends (14a) of the negative electrodes (14) extend further toward the folding portion-side outer wall (24) than ends (13a) of the positive electrodes (13), and
a distance between each of the ends (14a) of the negative electrodes (14) and the folding portion-side outer wall (24) is less than half a distance between each of the ends (14a) of the negative electrodes (14) and each of the ends (13a) of the positive electrodes (13).

19. A battery module (100) comprising:
a housing (2);
secondary batteries (1) which are stacked within the housing (2); and
a cooling unit (3) provided on a bottom surface inside the housing (2) and configured to cool the secondary batteries (1),
wherein each of the secondary batteries (1) comprises:
- an electrode assembly (10) in which positive electrodes (13) and negative electrodes (14) are alternately stacked with separators (11) therebetween; and
- a pouch (20) which is formed by sealing a pair of cases (21) integrally connected via a folding portion (29) and comprises an accommodation portion (22) that accommodates the electrode assembly (10),
wherein the pouch (20) further comprises outer walls (24, 25) forming a peripheral surface of the accommodation portion (22),
wherein the outer walls (24, 25) comprise:
- a folding portion-side outer wall (24) which comprises the folding portion (29) and is adjacent to the cooling unit (3); and
- a sealing portion-side outer wall (25) connected to a sealing portion (26) in which the pair of cases (21) are fused,
wherein an average distance between ends (14a) of the negative electrodes (14) and the folding portion-side outer wall (24) is about 0.6 mm or less.

20. A battery module (100) comprising:
a housing (2);
secondary batteries (1) which are stacked within the housing (2); and
a cooling unit (3) provided on a bottom surface inside the housing (2) and configured to cool the secondary batteries (1),
wherein each of the secondary batteries (1) comprises:
- an electrode assembly (10) in which positive electrodes (13) and negative electrodes (14) are alternately stacked with separators (11) therebetween; and
- a pouch (20) which is formed by sealing a pair of cases (21) integrally connected via a folding portion (29) and comprises an accommodation portion (22) that accommodates the electrode assembly (10),
wherein the pouch (20) further comprises outer walls (24, 25) forming a peripheral surface of the accommodation portion (22),
wherein the outer walls (24, 25) comprise:
- a folding portion-side outer wall (24) which comprises the folding portion (29) and is adjacent to the cooling unit (3); and
- a sealing portion-side outer wall (25) connected to a sealing portion (26) in which the pair of cases (21) are fused,
wherein ends (14a) of the negative electrodes (14) further protrude toward the folding portion-side outer wall (24) than ends (13a) of the positive electrodes (13),
wherein a distance between each of the ends (14a) of the negative electrodes (14) and the folding portion-side outer wall (24) is less than half a distance between each of the ends (14a) of the negative electrodes (14) and each of the ends (13a) of the positive electrodes (13).
